# EUROPEAN PATENT APPLICATION

(11) **EP 4 800 559 A1**
(43) Date of publication of application: **02.09.2026**
(21) Application number: 24881349.5
(22) Date of filing: 25.09.2024
(51) Int. Cl.: G06F 11/30

(54) **INFORMATION PROCESSING METHOD AND APPARATUS, AND DEVICE**

(30) Priority: 23.10.2023 CN 202311376082
(71) Applicant: Datang Mobile Communications Equipment Co., Ltd., Beijing 100085 (CN)
(72) Inventor: LI, Qianrui, Beijing 100085 (CN); HUANG, Qiuping, Beijing 100085 (CN); GAO, Qiubin, Beijing 100085 (CN); ZUO, Jun, Beijing 100085 (CN); FEI, Yongqiang, Beijing 100085 (CN)
(74) Representative: dompatent
(86) International application number: PCT/CN2024/120918
(87) International publication number: WO 2025/086983

(57) **Abstract**

This disclosure provides an information processing method and apparatus, and device, and pertains to the field of communication technology. The information processing method includes: obtaining performance monitoring accuracy based on at least two test samples; determining monitoring event-related information associated with the performance monitoring accuracy, wherein the monitoring event-related information includes: a definition of a monitoring event, and an entry condition and/or exit condition of the monitoring event; and controlling a triggering operation for performance monitoring reporting based on the performance monitoring accuracy and the monitoring event-related information; wherein a first device is a network device or a terminal.

## Description

### CROSS-REFERENCE TO RELATED APPLICATION

This application claims priority to Chinese Patent Application No. 202311376082.5, filed on October 23, 2023, entitled "Information Processing Method and Apparatus and Device", disclosure of which is incorporated herein by reference in its entirety.

### TECHNICAL FIELD

This disclosure relates to the field of communication technology, and in particular to an information processing method and apparatus, and device.

### BACKGROUND

In related technologies, in order to ensure the applicability of a model, schemes for monitoring the model's performance were proposed. However, the schemes do not involve the usage of the monitoring results (such as reporting), which makes it still impossible to support accurate decision-making with respect to switching, rollback, updating, activation and/or deactivation of the model.

As shown above, the information processing schemes for model monitoring in related technologies suffer from the problem that the scheme are unable to support accurate model decision-making operations.

It should be noted that, since model monitoring is to monitor the performance of the model and to judge the performance of the model based on the monitoring results, "model monitoring" can be understood or replaced as "performance monitoring".

### SUMMARY

This disclosure aims to provide an information processing method and apparatus, and device to solve the problem that information processing schemes for model monitoring in related technologies cannot support accurate model decision-making operations.

To address the aforementioned technical problems, an embodiment of this disclosure provides an information processing method, performed by a first device, including:
obtaining performance monitoring accuracy based on at least two test samples, wherein the test samples are determined based on a target channel state information (CSI) and a CSI recovered through a model and corresponding to the target CSI, the performance monitoring accuracy is based on a statistical result of the at least two test samples;
determining monitoring event-related information associated with the performance monitoring accuracy, wherein the monitoring event-related information includes: a definition of a monitoring event, and an entry condition and/or exit condition of the monitoring event; and
controlling a triggering operation for performance monitoring reporting based on the performance monitoring accuracy and the monitoring event-related information;
wherein the first device is a network device or a terminal.

Optionally, controlling the triggering operation for performance monitoring reporting based on the performance monitoring accuracy and monitoring event-related information includes:
in a case that a monitoring event status is that the performance monitoring accuracy does not meet a usage condition, and the performance monitoring accuracy meets the entry condition of the monitoring event, triggering an operation of performance monitoring reporting; or,
in a case that the monitoring event status is that the performance monitoring accuracy meets the usage condition and the performance monitoring accuracy meets the exit condition of the monitoring event, triggering an operation of performance monitoring reporting.

Optionally, the method further includes:
determining a monitoring reporting condition; wherein the monitoring reporting condition includes: a reporting threshold and/or a reporting timer duration;
the triggering the operation of performance monitoring reporting in a case that the monitoring event status is that the performance monitoring accuracy does not meet the usage condition, and the performance monitoring accuracy meets the entry condition of the monitoring event includes:
   in a case that the monitoring event status is that the performance monitoring accuracy does not meet the usage condition, and a first number of times the performance monitoring accuracy meets the entry condition of the monitoring event within the reporting timer duration is greater than the reporting threshold, triggering the operation of performance monitoring reporting; wherein reported content is used for indicating that a currently used model is expired; the first number of times is determined based on a real-time number of times the performance monitoring accuracy meets the entry condition of the monitoring event, or, the first number of times is determined based on the real-time number of times the performance monitoring accuracy meets the entry condition of the monitoring event and a real-time number of times the performance monitoring accuracy meets the exit condition of the monitoring event, or, the first number of times refers to a consecutive number of times the performance monitoring accuracy meets the entry condition of the monitoring event; and/or
   the triggering the operation of performance monitoring reporting in a case that the monitoring event status is that the performance monitoring accuracy meets the usage condition, and the performance monitoring accuracy meets the exit condition of the monitoring event includes:
      in a case that the monitoring event status is that the performance monitoring accuracy meets the usage condition, and a second number of times the performance monitoring accuracy meets the exit condition of the monitoring event within the reporting timer duration is greater than the reporting threshold, triggering the operation of performance monitoring reporting; wherein reported content is used for indicating that a currently used model is expired; the second number of times is determined based on a real-time number of times the performance monitoring accuracy meets the exit condition of the monitoring event, or, the second number of times is determined based on the real-time number of times the performance monitoring accuracy meets the exit condition of the monitoring event and a real-time number of times the performance monitoring accuracy meets the entry condition of the monitoring event, or, the second number of times refers to a consecutive number of times the performance monitoring accuracy meets the exit condition of the monitoring event.

Optionally, the model includes the currently used model and at least one candidate model;
the obtaining the performance monitoring accuracy based on the at least two test samples includes:
obtaining a first performance monitoring accuracy for the currently used model based on at least two test samples corresponding to the currently used model;
obtaining a second performance monitoring accuracy for the candidate model based on at least two test samples corresponding to the candidate model.

Optionally, the monitoring event includes: a first monitoring event for the currently used model and a second monitoring event for the candidate model;
the reporting threshold includes: a first reporting threshold for the currently used model and a second reporting threshold for the candidate model;
the reporting timer duration includes: a first reporting timer duration for the currently used model and a second reporting timer duration for the candidate model.

Optionally, the triggering the operation of performance monitoring reporting in a case that the monitoring event status is that the performance monitoring accuracy does not meet the usage condition, and the performance monitoring accuracy meets the entry condition of the monitoring event includes:
in a case that a first monitoring event status is that the first performance monitoring accuracy does not meet the usage condition, and a first condition is met, and a second monitoring event status is that the second performance monitoring accuracy of any candidate model meets the usage condition, and a second condition is met, triggering the operation of performance monitoring reporting; reported content is used for indicating that model switching is to be done and the reported content carries information about the candidate model; or,
in a case that the first monitoring event status is that the first performance monitoring accuracy does not meet the usage condition, and the first condition is met, and the second monitoring event status is that the second performance monitoring accuracy of any candidate model does not meet the usage condition, and a third condition is met, triggering the operation of performance monitoring reporting; reported content is used for indicating that model switching is to be done and the reported content carries information about the candidate model;
wherein the first condition includes: a third number of times the first performance monitoring accuracy meets an entry condition of the first monitoring event within the first reporting timer duration is greater than the first reporting threshold; the third number of times is determined based on a real-time number of times the first performance monitoring accuracy meets the entry condition of the first monitoring event, or the third number of times is determined based on the real-time number of times the first performance monitoring accuracy meets the entry condition of the first monitoring event and a real-time number of times the first performance monitoring accuracy meets an exit condition of the first monitoring event, or the third number of times refers to a consecutive number of times the first performance monitoring accuracy meets the entry condition of the first monitoring event;
the second condition includes: a fourth number of times the second performance monitoring accuracy meets an entry condition of the second monitoring event within the second reporting timer duration is greater than the second reporting threshold; the fourth number of times is determined based on a real-time number of times the second performance monitoring accuracy meets the entry condition of the second monitoring event, or the fourth number of times is determined based on the real-time number of times the second performance monitoring accuracy meets the entry condition of the second monitoring event and a real-time number of times the second performance monitoring accuracy meets an exit condition of the second monitoring event, or the fourth number of times refers to a consecutive number of times the second performance monitoring accuracy meets the entry condition of the second monitoring event;
the third condition includes: a fifth number of times the second performance monitoring accuracy meets the exit condition of the second monitoring event within the second reporting timer duration is greater than the second reporting threshold; the fifth number of times is determined based on the real-time number of times the second performance monitoring accuracy meets the exit condition of the second monitoring event, or the fifth number of times is determined based on the real-time number of times the second performance monitoring accuracy meets the exit condition of the second monitoring event and the real-time number of times the second performance monitoring accuracy meets the entry condition of the second monitoring event, or the fifth number of times refers to a consecutive number of times the second performance monitoring accuracy meets the exit condition of the second monitoring event.

Optionally, the triggering the operation of performance monitoring reporting in a case that the monitoring event status is that the performance monitoring accuracy meets the usage condition, and the performance monitoring accuracy meets the exit condition of the monitoring event includes:
in a case that a first monitoring event status is that the first performance monitoring accuracy meets the usage condition, and a fourth condition is met, and a second monitoring event status is that the second performance monitoring accuracy of any candidate model meets the usage condition, and a fifth condition is met, triggering the operation of performance monitoring reporting; reported content is used for indicating that model switching is to be done and the reported content carries information about the candidate model; or,
in a case that the first monitoring event status is that the first performance monitoring accuracy meets the usage condition, and the fourth condition is met, and the second monitoring event status is that the second performance monitoring accuracy of any candidate model does not meet the usage conditions, and a sixth condition is met, triggering the operation of performance monitoring reporting; reported content is used for indicating that model switching is to be done and the reported content carries information about the candidate model;
wherein the fourth condition includes: a sixth number of times the first performance monitoring accuracy meets an exit condition of the first monitoring event within the first reporting timer duration is greater than the first reporting threshold; the sixth number of times is determined based on a real-time number of times the first performance monitoring accuracy meets the exit condition of the first monitoring event, or the sixth number of times is determined based on the real-time number of times the first performance monitoring accuracy meets the exit condition of the first monitoring event and a real-time number of times the first performance monitoring accuracy meets an entry condition of the first monitoring event, or the sixth number of times refers to a consecutive number of times the first performance monitoring accuracy meets the entry condition of the first monitoring event;
the fifth condition includes: a seventh number of times the second performance monitoring accuracy meets an entry condition of the second monitoring event within the second reporting timer duration is greater than the second reporting threshold; the seventh number of times is determined based on a real-time number of times the second performance monitoring accuracy meets the entry condition of the second monitoring event, or the seventh number of times is determined based on the real-time number of times the second performance monitoring accuracy meets the entry condition of the second monitoring event and a real-time number of times the second performance monitoring accuracy meets an exit condition of the second monitoring event, or the seventh number of times refers to a consecutive number of times the second performance monitoring accuracy meets the entry condition of the second monitoring event;
the sixth condition includes: an eighth number of times the second performance monitoring accuracy meets the exit condition of the second monitoring event within the second reporting timer duration is greater than the second reporting threshold; the eighth number of times is determined based on the real-time number of times the second performance monitoring accuracy meets the exit condition of the second monitoring event, or the eighth number of times is determined based on the real-time number of times the second performance monitoring accuracy meets the exit condition of the second monitoring event and the real-time number of times the second performance monitoring accuracy meets the entry condition of the second monitoring event, or the eighth number of times refers to a consecutive number of times the second performance monitoring accuracy meets the exit condition of the second monitoring event.

Optionally, the controlling the triggering operation for performance monitoring reporting based on the performance monitoring accuracy and the monitoring event-related information further includes:
in a case that the monitoring event status is that the performance monitoring accuracy of the currently used model is less than the performance monitoring accuracy of any candidate model, triggering an operation of performance monitoring reporting;
wherein reported content is used for indicating that model switching is to be done and the reported content carries information about the candidate model.

Optionally, the method further includes:
obtaining the at least two test samples by using a time-domain sliding window of a first length.

Optionally, before obtaining the performance monitoring accuracy based on at least two test samples, the method further includes:
preprocessing the at least two test samples;
wherein the preprocessing includes at least one of weighted processing or anomaly removal processing.

Optionally, the entry condition and/or the exit condition is determined based on a hysteresis parameter and a corresponding threshold.

Optionally, the monitoring event-related information is determined according to a predefinition in a protocol and/or a network-side configuration;
a monitoring reporting condition is determined according to a predefinition in a protocol and/or a network-side configuration; and/or
a first length is determined according to a predefinition in a protocol and/or a network-side configuration; and/or
a sliding step size of a time-domain sliding window is determined according to a predefinition in a protocol and/or a network-side configuration; and/or
a hysteresis parameter is determined according to a predefinition in a protocol and/or a network-side configuration; and/or
a threshold is determined according to a predefinition in a protocol and/or a network-side configuration.

An embodiment of this disclosure further provides an information processing method, performed by a first device, including:
obtaining at least two test samples by using a time-domain sliding window of a first length;
wherein the test samples are determined based on a target CSI and a CSI recovered through a model and corresponding to the target CSI;
the first device is a network device or a terminal.

Optionally, the method further includes:
preprocessing the at least two test samples;
wherein the preprocessing includes at least one of weighted processing or anomaly removal processing.

Optionally, the first length is determined according to a predefinition in a protocol and/or a network-side configuration;
a sliding step size of the time-domain sliding window is determined according to a predefinition in a protocol and/or a network-side configuration.

An embodiment of this disclosure further provides an information processing device, which is a first device including a memory, a transceiver, and a processor,
wherein the memory is used for storing a computer program; the transceiver is used for sending and receiving data under the control of the processor; and the processor is used for reading the computer programs from the memory and performing the following steps:
obtaining performance monitoring accuracy based on at least two test samples, wherein the test samples are determined based on a target channel state information (CSI) and a CSI recovered through a model and corresponding to the target CSI, the performance monitoring accuracy is based on a statistical result of the at least two test samples;
determining monitoring event-related information associated with the performance monitoring accuracy, wherein the monitoring event-related information includes: a definition of a monitoring event, and an entry condition and/or exit condition of the monitoring event; and
controlling a triggering operation for performance monitoring reporting based on the performance monitoring accuracy and the monitoring event-related information;
wherein the first device is a network device or a terminal.

Optionally, controlling the triggering operation for performance monitoring reporting based on the performance monitoring accuracy and monitoring event-related information includes:
in a case that a monitoring event status is that the performance monitoring accuracy does not meet a usage condition, and the performance monitoring accuracy meets the entry condition of the monitoring event, triggering an operation of performance monitoring reporting; or,
in a case that the monitoring event status is that the performance monitoring accuracy meets the usage condition and the performance monitoring accuracy meets the exit condition of the monitoring event, triggering an operation of performance monitoring reporting.

Optionally, the steps further include:
determining a monitoring reporting condition; wherein the monitoring reporting condition includes: a reporting threshold and/or a reporting timer duration;
the triggering the operation of performance monitoring reporting in a case that the monitoring event status is that the performance monitoring accuracy does not meet the usage condition, and the performance monitoring accuracy meets the entry condition of the monitoring event includes:
   in a case that the monitoring event status is that the performance monitoring accuracy does not meet the usage condition, and a first number of times the performance monitoring accuracy meets the entry condition of the monitoring event within the reporting timer duration is greater than the reporting threshold, triggering the operation of performance monitoring reporting; wherein reported content is used for indicating that a currently used model is expired; the first number of times is determined based on a real-time number of times the performance monitoring accuracy meets the entry condition of the monitoring event, or, the first number of times is determined based on the real-time number of times the performance monitoring accuracy meets the entry condition of the monitoring event and a real-time number of times the performance monitoring accuracy meets the exit condition of the monitoring event, or, the first number of times refers to a consecutive number of times the performance monitoring accuracy meets the entry condition of the monitoring event; and/or
   the triggering the operation of performance monitoring reporting in a case that the monitoring event status is that the performance monitoring accuracy meets the usage condition, and the performance monitoring accuracy meets the exit condition of the monitoring event includes:
      in a case that the monitoring event status is that the performance monitoring accuracy meets the usage condition, and a second number of times the performance monitoring accuracy meets the exit condition of the monitoring event within the reporting timer duration is greater than the reporting threshold, triggering the operation of performance monitoring reporting; wherein reported content is used for indicating that a currently used model is expired; the second number of times is determined based on a real-time number of times the performance monitoring accuracy meets the exit condition of the monitoring event, or, the second number of times is determined based on the real-time number of times the performance monitoring accuracy meets the exit condition of the monitoring event and a real-time number of times the performance monitoring accuracy meets the entry condition of the monitoring event, or, the second number of times refers to a consecutive number of times the performance monitoring accuracy meets the exit condition of the monitoring event.

Optionally, the model includes the currently used model and at least one candidate model;
the obtaining the performance monitoring accuracy based on the at least two test samples includes:
obtaining a first performance monitoring accuracy for the currently used model based on at least two test samples corresponding to the currently used model;
obtaining a second performance monitoring accuracy for the candidate model based on at least two test samples corresponding to the candidate model.

Optionally, the monitoring event includes: a first monitoring event for the currently used model and a second monitoring event for the candidate model;
the reporting threshold includes: a first reporting threshold for the currently used model and a second reporting threshold for the candidate model;
the reporting timer duration includes: a first reporting timer duration for the currently used model and a second reporting timer duration for the candidate model.

Optionally, the triggering the operation of performance monitoring reporting in a case that the monitoring event status is that the performance monitoring accuracy does not meet the usage condition, and the performance monitoring accuracy meets the entry condition of the monitoring event includes:
in a case that a first monitoring event status is that the first performance monitoring accuracy does not meet the usage condition, and a first condition is met, and a second monitoring event status is that the second performance monitoring accuracy of any candidate model meets the usage condition, and a second condition is met, triggering the operation of performance monitoring reporting; reported content is used for indicating that model switching is to be done and the reported content carries information about the candidate model; or,
in a case that the first monitoring event status is that the first performance monitoring accuracy does not meet the usage condition, and the first condition is met, and the second monitoring event status is that the second performance monitoring accuracy of any candidate model does not meet the usage condition, and a third condition is met, triggering the operation of performance monitoring reporting; reported content is used for indicating that model switching is to be done and the reported content carries information about the candidate model;
wherein the first condition includes: a third number of times the first performance monitoring accuracy meets an entry condition of the first monitoring event within the first reporting timer duration is greater than the first reporting threshold; the third number of times is determined based on a real-time number of times the first performance monitoring accuracy meets the entry condition of the first monitoring event, or the third number of times is determined based on the real-time number of times the first performance monitoring accuracy meets the entry condition of the first monitoring event and a real-time number of times the first performance monitoring accuracy meets an exit condition of the first monitoring event, or the third number of times refers to a consecutive number of times the first performance monitoring accuracy meets the entry condition of the first monitoring event;
the second condition includes: a fourth number of times the second performance monitoring accuracy meets an entry condition of the second monitoring event within the second reporting timer duration is greater than the second reporting threshold; the fourth number of times is determined based on a real-time number of times the second performance monitoring accuracy meets the entry condition of the second monitoring event, or the fourth number of times is determined based on the real-time number of times the second performance monitoring accuracy meets the entry condition of the second monitoring event and a real-time number of times the second performance monitoring accuracy meets an exit condition of the second monitoring event, or the fourth number of times refers to a consecutive number of times the second performance monitoring accuracy meets the entry condition of the second monitoring event;
the third condition includes: a fifth number of times the second performance monitoring accuracy meets the exit condition of the second monitoring event within the second reporting timer duration is greater than the second reporting threshold; the fifth number of times is determined based on the real-time number of times the second performance monitoring accuracy meets the exit condition of the second monitoring event, or the fifth number of times is determined based on the real-time number of times the second performance monitoring accuracy meets the exit condition of the second monitoring event and the real-time number of times the second performance monitoring accuracy meets the entry condition of the second monitoring event, or the fifth number of times refers to a consecutive number of times the second performance monitoring accuracy meets the exit condition of the second monitoring event.

Optionally, the triggering the operation of performance monitoring reporting in a case that the monitoring event status is that the performance monitoring accuracy meets the usage condition, and the performance monitoring accuracy meets the exit condition of the monitoring event includes:
in a case that a first monitoring event status is that the first performance monitoring accuracy meets the usage condition, and a fourth condition is met, and a second monitoring event status is that the second performance monitoring accuracy of any candidate model meets the usage condition, and a fifth condition is met, triggering the operation of performance monitoring reporting; reported content is used for indicating that model switching is to be done and the reported content carries information about the candidate model; or,
in a case that the first monitoring event status is that the first performance monitoring accuracy meets the usage condition, and the fourth condition is met, and the second monitoring event status is that the second performance monitoring accuracy of any candidate model does not meet the usage conditions, and a sixth condition is met, triggering the operation of performance monitoring reporting; reported content is used for indicating that model switching is to be done and the reported content carries information about the candidate model;
wherein the fourth condition includes: a sixth number of times the first performance monitoring accuracy meets an exit condition of the first monitoring event within the first reporting timer duration is greater than the first reporting threshold; the sixth number of times is determined based on a real-time number of times the first performance monitoring accuracy meets the exit condition of the first monitoring event, or the sixth number of times is determined based on the real-time number of times the first performance monitoring accuracy meets the exit condition of the first monitoring event and a real-time number of times the first performance monitoring accuracy meets an entry condition of the first monitoring event, or the sixth number of times refers to a consecutive number of times the first performance monitoring accuracy meets the entry condition of the first monitoring event;
the fifth condition includes: a seventh number of times the second performance monitoring accuracy meets an entry condition of the second monitoring event within the second reporting timer duration is greater than the second reporting threshold; the seventh number of times is determined based on a real-time number of times the second performance monitoring accuracy meets the entry condition of the second monitoring event, or the seventh number of times is determined based on the real-time number of times the second performance monitoring accuracy meets the entry condition of the second monitoring event and a real-time number of times the second performance monitoring accuracy meets an exit condition of the second monitoring event, or the seventh number of times refers to a consecutive number of times the second performance monitoring accuracy meets the entry condition of the second monitoring event;
the sixth condition includes: an eighth number of times the second performance monitoring accuracy meets the exit condition of the second monitoring event within the second reporting timer duration is greater than the second reporting threshold; the eighth number of times is determined based on the real-time number of times the second performance monitoring accuracy meets the exit condition of the second monitoring event, or the eighth number of times is determined based on the real-time number of times the second performance monitoring accuracy meets the exit condition of the second monitoring event and the real-time number of times the second performance monitoring accuracy meets the entry condition of the second monitoring event, or the eighth number of times refers to a consecutive number of times the second performance monitoring accuracy meets the exit condition of the second monitoring event.

Optionally, the controlling the triggering operation for performance monitoring reporting based on the performance monitoring accuracy and the monitoring event-related information further includes:
in a case that the monitoring event status is that the performance monitoring accuracy of the currently used model is less than the performance monitoring accuracy of any candidate model, triggering an operation of performance monitoring reporting;
wherein reported content is used for indicating that model switching is to be done and the reported content carries information about the candidate model.

Optionally, the steps further include:
obtaining the at least two test samples by using a time-domain sliding window of a first length.

Optionally, the steps further include:
before obtaining the performance monitoring accuracy based on at least two test samples, preprocessing the at least two test samples;
wherein the preprocessing includes at least one of weighted processing or anomaly removal processing.

Optionally, the entry condition and/or the exit condition is determined based on a hysteresis parameter and a corresponding threshold.

Optionally, the monitoring event-related information is determined according to a predefinition in a protocol and/or a network-side configuration;
a monitoring reporting condition is determined according to a predefinition in a protocol and/or a network-side configuration; and/or
a first length is determined according to a predefinition in a protocol and/or a network-side configuration; and/or
a sliding step size of a time-domain sliding window is determined according to a predefinition in a protocol and/or a network-side configuration; and/or
a hysteresis parameter is determined according to a predefinition in a protocol and/or a network-side configuration; and/or
a threshold is determined according to a predefinition in a protocol and/or a network-side configuration.

An embodiment of this disclosure further provides an information processing device, which is a first device including a memory, a transceiver, and a processor,
wherein the memory is used for storing a computer program; the transceiver is used for sending and receiving data under the control of the processor; and the processor is used for reading the computer programs from the memory and performing the following step:
obtaining at least two test samples by using a time-domain sliding window of a first length;
wherein the test samples are determined based on a target CSI and a CSI recovered through a model and corresponding to the target CSI;
the first device is a network device or a terminal.

Optionally, the step further includes:
preprocessing the at least two test samples;
wherein the preprocessing includes at least one of weighted processing or anomaly removal processing.

Optionally, the first length is determined according to a predefinition in a protocol and/or a network-side configuration;
a sliding step size of the time-domain sliding window is determined according to a predefinition in a protocol and/or a network-side configuration.

An embodiment of this disclosure further provides an information processing apparatus, applied to a first device, including:
a first obtaining unit, configured to obtain performance monitoring accuracy based on at least two test samples, wherein the test samples are determined based on a target channel state information (CSI) and a CSI recovered through a model and corresponding to the target CSI; the performance monitoring accuracy is based on a statistical result of the at least two test samples;
a first determining unit, configured to determine monitoring event-related information associated with the performance monitoring accuracy, wherein the monitoring event-related information includes: a definition of a monitoring event, and an entry condition and/or exit condition of the monitoring event; and
a first control unit, configured to control a triggering operation for performance monitoring reporting based on the performance monitoring accuracy and the monitoring event-related information;
wherein the first device is a network device or a terminal.

Optionally, controlling the triggering operation for performance monitoring reporting based on the performance monitoring accuracy and monitoring event-related information includes:
in a case that a monitoring event status is that the performance monitoring accuracy does not meet a usage condition, and the performance monitoring accuracy meets the entry condition of the monitoring event, triggering an operation of performance monitoring reporting; or,
in a case that the monitoring event status is that the performance monitoring accuracy meets the usage condition and the performance monitoring accuracy meets the exit condition of the monitoring event, triggering an operation of performance monitoring reporting.

Optionally, the apparatus further includes:
a second determining unit, configured to determine a monitoring reporting condition, wherein the monitoring reporting condition includes: a reporting threshold and/or a reporting timer duration;
the triggering the operation of performance monitoring reporting in a case that the monitoring event status is that the performance monitoring accuracy does not meet the usage condition, and the performance monitoring accuracy meets the entry condition of the monitoring event includes:
   in a case that the monitoring event status is that the performance monitoring accuracy does not meet the usage condition, and a first number of times the performance monitoring accuracy meets the entry condition of the monitoring event within the reporting timer duration is greater than the reporting threshold, triggering the operation of performance monitoring reporting; wherein reported content is used for indicating that a currently used model is expired; the first number of times is determined based on a real-time number of times the performance monitoring accuracy meets the entry condition of the monitoring event, or, the first number of times is determined based on the real-time number of times the performance monitoring accuracy meets the entry condition of the monitoring event and a real-time number of times the performance monitoring accuracy meets the exit condition of the monitoring event, or, the first number of times refers to a consecutive number of times the performance monitoring accuracy meets the entry condition of the monitoring event; and/or

the triggering the operation of performance monitoring reporting in a case that the monitoring event status is that the performance monitoring accuracy meets the usage condition, and the performance monitoring accuracy meets the exit condition of the monitoring event includes:
in a case that the monitoring event status is that the performance monitoring accuracy meets the usage condition, and a second number of times the performance monitoring accuracy meets the exit condition of the monitoring event within the reporting timer duration is greater than the reporting threshold, triggering the operation of performance monitoring reporting; wherein reported content is used for indicating that a currently used model is expired; the second number of times is determined based on a real-time number of times the performance monitoring accuracy meets the exit condition of the monitoring event, or, the second number of times is determined based on the real-time number of times the performance monitoring accuracy meets the exit condition of the monitoring event and a real-time number of times the performance monitoring accuracy meets the entry condition of the monitoring event, or, the second number of times refers to a consecutive number of times the performance monitoring accuracy meets the exit condition of the monitoring event.

Optionally, the model includes the currently used model and at least one candidate model;
the obtaining the performance monitoring accuracy based on the at least two test samples includes:
obtaining a first performance monitoring accuracy for the currently used model based on at least two test samples corresponding to the currently used model;
obtaining a second performance monitoring accuracy for the candidate model based on at least two test samples corresponding to the candidate model.

Optionally, the monitoring event includes: a first monitoring event for the currently used model and a second monitoring event for the candidate model;
the reporting threshold includes: a first reporting threshold for the currently used model and a second reporting threshold for the candidate model;
the reporting timer duration includes: a first reporting timer duration for the currently used model and a second reporting timer duration for the candidate model.

Optionally, the triggering the operation of performance monitoring reporting in a case that the monitoring event status is that the performance monitoring accuracy does not meet the usage condition, and the performance monitoring accuracy meets the entry condition of the monitoring event includes:
in a case that a first monitoring event status is that the first performance monitoring accuracy does not meet the usage condition, and a first condition is met, and a second monitoring event status is that the second performance monitoring accuracy of any candidate model meets the usage condition, and a second condition is met, triggering the operation of performance monitoring reporting; reported content is used for indicating that model switching is to be done and the reported content carries information about the candidate model; or,
in a case that the first monitoring event status is that the first performance monitoring accuracy does not meet the usage condition, and the first condition is met, and the second monitoring event status is that the second performance monitoring accuracy of any candidate model does not meet the usage condition, and a third condition is met, triggering the operation of performance monitoring reporting; reported content is used for indicating that model switching is to be done and the reported content carries information about the candidate model;
wherein the first condition includes: a third number of times the first performance monitoring accuracy meets an entry condition of the first monitoring event within the first reporting timer duration is greater than the first reporting threshold; the third number of times is determined based on a real-time number of times the first performance monitoring accuracy meets the entry condition of the first monitoring event, or the third number of times is determined based on the real-time number of times the first performance monitoring accuracy meets the entry condition of the first monitoring event and a real-time number of times the first performance monitoring accuracy meets an exit condition of the first monitoring event, or the third number of times refers to a consecutive number of times the first performance monitoring accuracy meets the entry condition of the first monitoring event;
the second condition includes: a fourth number of times the second performance monitoring accuracy meets an entry condition of the second monitoring event within the second reporting timer duration is greater than the second reporting threshold; the fourth number of times is determined based on a real-time number of times the second performance monitoring accuracy meets the entry condition of the second monitoring event, or the fourth number of times is determined based on the real-time number of times the second performance monitoring accuracy meets the entry condition of the second monitoring event and a real-time number of times the second performance monitoring accuracy meets an exit condition of the second monitoring event, or the fourth number of times refers to a consecutive number of times the second performance monitoring accuracy meets the entry condition of the second monitoring event;
the third condition includes: a fifth number of times the second performance monitoring accuracy meets the exit condition of the second monitoring event within the second reporting timer duration is greater than the second reporting threshold; the fifth number of times is determined based on the real-time number of times the second performance monitoring accuracy meets the exit condition of the second monitoring event, or the fifth number of times is determined based on the real-time number of times the second performance monitoring accuracy meets the exit condition of the second monitoring event and the real-time number of times the second performance monitoring accuracy meets the entry condition of the second monitoring event, or the fifth number of times refers to a consecutive number of times the second performance monitoring accuracy meets the exit condition of the second monitoring event.

Optionally, the triggering the operation of performance monitoring reporting in a case that the monitoring event status is that the performance monitoring accuracy meets the usage condition, and the performance monitoring accuracy meets the exit condition of the monitoring event includes:
in a case that a first monitoring event status is that the first performance monitoring accuracy meets the usage condition, and a fourth condition is met, and a second monitoring event status is that the second performance monitoring accuracy of any candidate model meets the usage condition, and a fifth condition is met, triggering the operation of performance monitoring reporting; reported content is used for indicating that model switching is to be done and the reported content carries information about the candidate model; or,
in a case that the first monitoring event status is that the first performance monitoring accuracy meets the usage condition, and the fourth condition is met, and the second monitoring event status is that the second performance monitoring accuracy of any candidate model does not meet the usage conditions, and a sixth condition is met, triggering the operation of performance monitoring reporting; reported content is used for indicating that model switching is to be done and the reported content carries information about the candidate model;
wherein the fourth condition includes: a sixth number of times the first performance monitoring accuracy meets an exit condition of the first monitoring event within the first reporting timer duration is greater than the first reporting threshold; the sixth number of times is determined based on a real-time number of times the first performance monitoring accuracy meets the exit condition of the first monitoring event, or the sixth number of times is determined based on the real-time number of times the first performance monitoring accuracy meets the exit condition of the first monitoring event and a real-time number of times the first performance monitoring accuracy meets an entry condition of the first monitoring event, or the sixth number of times refers to a consecutive number of times the first performance monitoring accuracy meets the entry condition of the first monitoring event;
the fifth condition includes: a seventh number of times the second performance monitoring accuracy meets an entry condition of the second monitoring event within the second reporting timer duration is greater than the second reporting threshold; the seventh number of times is determined based on a real-time number of times the second performance monitoring accuracy meets the entry condition of the second monitoring event, or the seventh number of times is determined based on the real-time number of times the second performance monitoring accuracy meets the entry condition of the second monitoring event and a real-time number of times the second performance monitoring accuracy meets an exit condition of the second monitoring event, or the seventh number of times refers to a consecutive number of times the second performance monitoring accuracy meets the entry condition of the second monitoring event;
the sixth condition includes: an eighth number of times the second performance monitoring accuracy meets the exit condition of the second monitoring event within the second reporting timer duration is greater than the second reporting threshold; the eighth number of times is determined based on the real-time number of times the second performance monitoring accuracy meets the exit condition of the second monitoring event, or the eighth number of times is determined based on the real-time number of times the second performance monitoring accuracy meets the exit condition of the second monitoring event and the real-time number of times the second performance monitoring accuracy meets the entry condition of the second monitoring event, or the eighth number of times refers to a consecutive number of times the second performance monitoring accuracy meets the exit condition of the second monitoring event.

Optionally, the controlling the triggering operation for performance monitoring reporting based on the performance monitoring accuracy and the monitoring event-related information further includes:
in a case that the monitoring event status is that the performance monitoring accuracy of the currently used model is less than the performance monitoring accuracy of any candidate model, triggering an operation of performance monitoring reporting;
wherein reported content is used for indicating that model switching is to be done and the reported content carries information about the candidate model.

Optionally, the apparatus further includes:
a second obtaining unit, configured to obtain the at least two test samples by using a time-domain sliding window of a first length.

Optionally, the apparatus further includes:
a first processing unit, configured to preprocess the at least two test samples before obtaining the performance monitoring accuracy based on the at least two test samples;
wherein the preprocessing includes at least one of weighted processing or anomaly removal processing.

Optionally, the entry condition and/or the exit condition is determined based on a hysteresis parameter and a corresponding threshold.

Optionally, the monitoring event-related information is determined according to a predefinition in a protocol and/or a network-side configuration;
a monitoring reporting condition is determined according to a predefinition in a protocol and/or a network-side configuration; and/or
a first length is determined according to a predefinition in a protocol and/or a network-side configuration; and/or
a sliding step size of a time-domain sliding window is determined according to a predefinition in a protocol and/or a network-side configuration; and/or
a hysteresis parameter is determined according to a predefinition in a protocol and/or a network-side configuration; and/or
a threshold is determined according to a predefinition in a protocol and/or a network-side configuration.

An embodiment of this disclosure further provides an information processing apparatus, applied to a first device, including:
a third obtaining unit, configured to obtain at least two test samples by using a time-domain sliding window of a first length;
wherein the test samples are determined based on a target CSI and a CSI recovered through a model and corresponding to the target CSI;
the first device is a network device or a terminal.

Optionally, the apparatus further includes:
a second processing unit, configured to preprocess the at least two test samples;
wherein the preprocessing includes at least one of weighted processing or anomaly removal processing.

Optionally, the first length is determined according to a predefinition in a protocol and/or a network-side configuration;
a sliding step size of the time-domain sliding window is determined according to a predefinition in a protocol and/or a network-side configuration.

An embodiment of this disclosure further provides a non-transitory readable storage medium storing a computer program for causing a processor to execute the above-described method.

The beneficial effects of the above-mentioned technical solution disclosed herein are as follows.

In the above scheme, by obtaining the performance monitoring accuracy based on at least two test samples; the test samples are determined based on the target channel state information (CSI) and the CSI recovered through the model and corresponding to the target CSI; the performance monitoring accuracy is based on the statistical result of the at least two test samples; determining monitoring event-related information associated with the performance monitoring accuracy; the monitoring event-related information includes: a definition of a monitoring event, and an entry condition and/or exit condition of the monitoring event; controlling the triggering operation for performance monitoring reporting based on the performance monitoring accuracy and the monitoring event-related information; wherein the first device is a network device or a terminal, the information processing method can support the control triggered by performance monitoring reporting based on performance monitoring accuracy (i.e., monitoring results), thereby supporting accurate decision-making operations such as model switching, rollback, update, activation, and/or deactivation, effectively solving the problem that information processing schemes for performance monitoring in related technologies cannot support accurate model decision-making operations.

### BRIEF DESCRIPTION OF THE DRAWINGS

Fig. 1 is a schematic diagram of a wireless communication system architecture according to an embodiment of this disclosure;
Fig. 2 is a schematic diagram of a network-side model monitoring process according to an embodiment of this disclosure;
Fig. 3 is a schematic diagram of a UE-side model monitoring process according to an embodiment of this disclosure;
Fig. 4 is another schematic diagram of a UE-side model monitoring process according to an embodiment of this disclosure;
Fig. 5 is a flowchart of an information processing method according to an embodiment of this disclosure;
Fig. 6 is another flowchart of an information processing method according to an embodiment of this disclosure;
Fig. 7 is a schematic diagram showing the time when test samples are obtained according to an embodiment of this disclosure;
Fig. 8 is a schematic structural diagram of an information processing device according to an embodiment of this disclosure;
Fig. 9 is another schematic structural diagram of an information processing device according to an embodiment of this disclosure;
Fig. 10 is a schematic structural diagram of an information processing apparatus according to an embodiment of this disclosure;
Fig. 11 is another schematic structural diagram of an information processing apparatus according to an embodiment of this disclosure.

### DETAILED DESCRIPTION

Technical solutions of the embodiments of this disclosure will be clearly and thoroughly described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

In embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In embodiments of this disclosure, the term "multiple" refers to two or more, and other quantifiers are similar.

It is noted, technical solutions of the embodiments of this disclosure are applicable to various systems, particularly 5th-Generation (5G) systems. Applicable systems include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR). All of these systems include a terminal device and a network device. The system may also include a core network component, such as the Evolved Packet System (EPS) or the 5G system (5GS system).

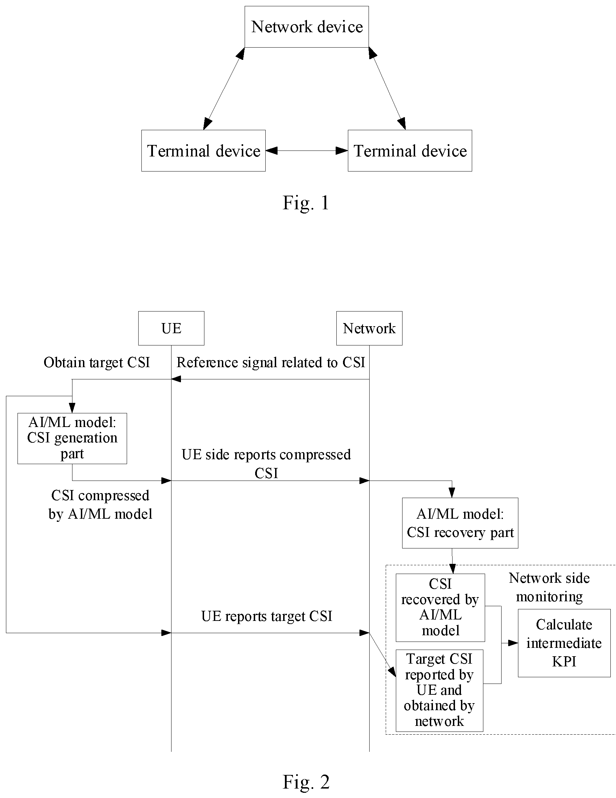

Fig. 1 shows a block diagram of a wireless communication system to which embodiments of the present disclosure are applicable. The wireless communication system includes a terminal device (also referred to simply as a terminal) and a network device.

The terminal device involved in the embodiments of this disclosure can be a device that provides voice and/or data connectivity to users, handheld device with wireless connectivity, or other processing device connected to a wireless modem. The names of the terminal devices may differ in different systems; for example, in a 5G system, a terminal device can be called User Equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but the embodiments of this disclosure are not limited thereto.

The network device involved in the embodiments of this disclosure can be a base station, which may include multiple cells providing services to terminals. Depending on the specific application, the base station may also be called an access point, or a device in the access network that communicates with the wireless terminal device through one or more sectors on the air interface, or other names. The network device can be used to exchange received air frames with Internet Protocol (IP) packets, acting as a router between the wireless terminal device and the rest of the access network, where the rest of the access network may include an Internet Protocol (IP) communication network. The network device can also coordinate the attribute management of the air interface. For example, the network device involved in this disclosure can be a base transceiver station (BTS) in a Global System for Mobile communications (GSM) or Code Division Multiple Access (CDMA) system, a NodeB in a Wide-band Code Division Multiple Access (WCDMA) system, an evolved Node B (eNB or e-NodeB) in a long-term evolution (LTE) system, a 5G base station (gNB) in a next-generation 5G network architecture, a Home evolved Node B (HeNB), a relay node, a femto, a pico, etc., and is not limited in this disclosure. In some network structures, the network device may include a centralized unit (CU) node and a distributed unit (DU) node, and the centralized unit and distributed unit may be geographically separated.

Network devices and terminal devices can each use one or more antennas to perform multiple-input multiple-output (MIMO) transmission. MIMO transmission can be single-user MIMO (SU-MIMO) or multiple-user MIMO (MU-MIMO). Depending on the configuration and number of antenna combinations, MIMO transmission can be two-dimensional MIMO (2D-MIMO), three-dimensional MIMO (3D-MIMO), full-dimensional MIMO (FD-MIMO), or massive-MIMO, and can also be diversity transmission, pre-coded transmission, or beamforming transmission, etc.

The following is a description of technologies related to the solutions provided in the embodiments of this disclosure.

Artificial Intelligence (AI)/Machine Learning (ML) model (i.e., AI and/or ML model) monitoring is a new problem arising from the introduction of AI/ML algorithms in 5G NR. Each AI/ML model has its applicable scope, and AI/ML model monitoring refers to that, when the application scenario differs from its training scenario or when the intrinsic relationship between input and output changes, the model's performance needs to be monitored, thereby determining whether the current model is suitable. It should be noted that since model monitoring involves monitoring the model's performance and judging the model's performance based on the monitoring results, the term "model monitoring" in embodiments of this disclosure can be understood as or replaced with "performance monitoring." For ease of description and understanding, the specific embodiments and accompanying drawings of this disclosure mainly use the term "model monitoring" for explanation.

In real-world systems, monitoring the performance of a current AI/ML model should not be based on a single result and judgement, as performing operation based on a single evaluation result may lead to frequent switching, rollback, updating, activation, and/or deactivation of the AI/ML model, which is a phenomenon known as the ping-pong effect.

In the conventional schemes, a conclusion to improve the stability of channel state information (CSI) compression AI/ML model monitoring is to introduce a dataset with K test samples, and the AI/ML model monitoring accuracy is the statistical result of performance evaluation over these K samples. Based on the above conclusion, the next issues to be addressed are: (1) how to obtain these K test samples from the data in time sequence, and (2) how to trigger AI/ML model monitoring reporting based on the AI/ML model monitoring accuracy indication obtained from the performance evaluation statistical result of these K samples, to request the network side to make decisions on the activation, deactivation, update, rollback and/or switching of the AI/ML model. Furthermore, it is also necessary to address the potential ping-pong effect problem of frequent changes in AI/ML model.

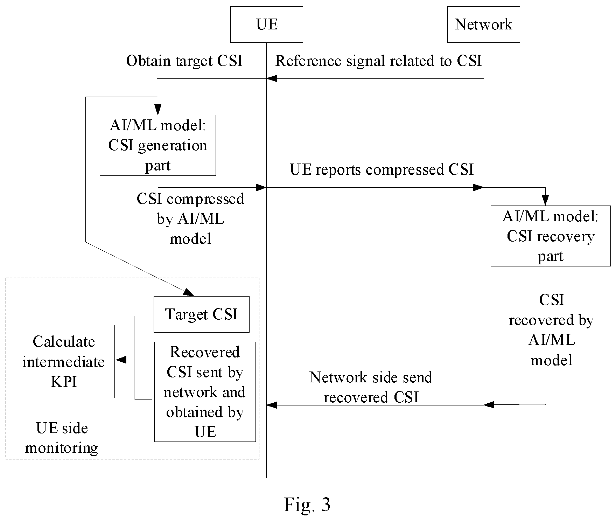

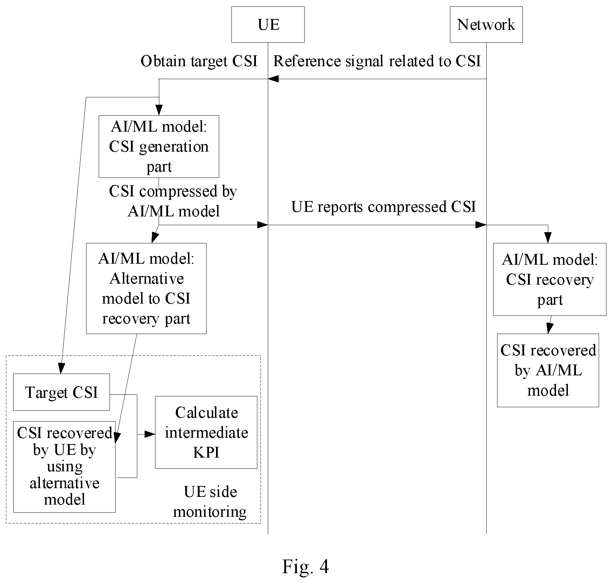

Based on the above, the relevant content will be introduced in detail below.
I. For AI/ML-based CSI compression, the following AI/ML model monitoring metrics are summarized in the conventional schemes:
   1. intermediate key performance indicator (KPI) is used as the monitoring metric (e.g., Squared Generalized Cosine Similarity (SGCS)), i.e., monitoring is based on inference accuracy;
   2. eventual KPI is used as the monitoring metric (e.g., throughput, hypothetical throughput, block error rate (BLER), hypothetical BLER, negative acknowledgment (NACK), or acknowledgment (ACK)), i.e., monitoring is based on system performance;
   3. model monitoring based on traditional CSI: a solution based on additional traditional CSI reporting;
   4. monitoring based on input and output data: e.g., monitoring based on data drift between a training dataset and an observation dataset, and monitoring based on output distribution.
II. CSI compression AI/ML model monitoring may be performed by the terminal (i.e., model monitoring on the terminal (User Equipment, UE) side) or the network (i.e., model monitoring on the network side). In the conventional schemes, for AI/ML model monitoring using the intermediate KPI as the monitoring metric, the following conclusions are reached.
   1. Network-side AI/ML model monitoring can be based on the target CSI reported by the UE side (referring to the input to the CSI generation part of the AI/ML model that is obtained by the UE side, also known as ground truth CSI). The CSI generation part of the AI/ML model can realize CSI compression, which can specifically include: CSI generation inference and quantization.
   2. UE-side AI/ML model monitoring:
      (1) UE-side AI/ML model monitoring can be based on recovered CSI sent by network-side (referring to the output of the CSI recovery part of the AI/ML model that is obtained by the network side); wherein, the CSI recovery part of the AI/ML model can realize CSI recovery, specifically including: dequantization and CSI recovery inference.
      (2) UE-side AI/ML model monitoring can be based on a model on the UE side that serves as an alternative to the network-side CSI recovery part AI/ML model.
   3. Other possibilities cannot be ruled out, e.g., on the UE side and based on a model that directly outputs intermediate KPI; or for another example, on the network side and based on the target CSI measured from the UE side's channel Sounding Reference Signal (SRS) (Time Division Duplex (TDD) mode).
III. Based on the above description, the network-side AI/ML model monitoring process based on the target CSI reported by the UE side can, as shown in Fig. 2, include:
   the UE obtains the target CSI based on the received CSI-related reference signal, then uses the AI/ML model (CSI generation part) to obtain the CSI compressed by the AI/ML model, and then performs UE-side feedback to report the compressed CSI and performs UE-side reporting of the target CSI;
   the network inputs the received compressed CSI to the AI/ML model (CSI recovery part) to obtain the CSI recovered by the AI/ML model, and then, based on the recovered CSI and the target CSI reported by the UE side and obtained by the network side, the network side performs network-side monitoring: the intermediate KPI is calculated based on the CSI recovered by the AI/ML model and the target CSI reported by the UE side and obtained by the network side.
IV. Based on the above description, the UE-side AI/ML model monitoring process based on the recovered CSI sent by the network-side can, as shown in Fig. 3, include:
   the UE obtains the target CSI based on the received CSI-related reference signal; then the UE uses the AI/ML model (CSI generation part) to obtain the CSI compressed by the AI/ML model, and then performs UE-side feedback to report the compressed CSI;
   the network inputs the received compressed CSI to the AI/ML model (CSI recovery part) to obtain the CSI recovered by the AI/ML model, and then returns the recovered CSI (i.e., the CSI recovered by the AI/ML model) to the UE;
   the UE calculates the intermediate KPI based on the recovered CSI sent by the network-side and obtained by the UE and the target CSI, in order to achieve UE-side monitoring.
V. Based on the above description, the UE-side AI/ML model monitoring process which is based on an alternative model on the UE side (i.e., a model on the UE side that serves as an alternative to the network-side CSI recovery part AI/ML model) can, as shown in Fig. 4, include:
   the UE obtains the target CSI based on the received CSI-related reference signal; then the UE uses the AI/ML model (CSI generation part) to obtain the CSI compressed by the AI/ML model, and then performs UE-side feedback to report the compressed CSI;
   the network inputs the received compressed CSI to the AI/ML model (CSI recovery part) to obtain the CSI recovered by the AI/ML model;
   the UE inputs the CSI compressed by the AI/ML model to the AI/ML model (an alternative CSI recovery part model) to obtain the CSI recovered by the UE using the alternative model; then, the UE calculates the intermediate KPI based on the target CSI and the CSI recovered by the UE using the alternative model, to achieve UE-side monitoring.
VI. In the conventional schemes, regarding the AI/ML model monitoring method based on the model accuracy intermediate KPI in CSI compression use cases, the following conclusion is reached.
   1. For CSI compression, the following model monitoring method is adopted when performance evaluation based on intermediate KPI monitoring is performed:
      step 1: generate a test dataset containing K test samples;
      step 2: for each of the K test samples, calculate the monitored intermediate KPI differential KPI_{Diff} by using the following formula: KPI_{Diff} = f(KPI_{Actual}, KPI_{Genie}), where KPI_{Actual} is the actual intermediate KPI, and KPI_{Genie} is the ideal intermediate KPI (genie-aided intermediate KPI);
      step 3: calculate the statistical result of KPI_{Diff} over K test samples, and the result represent the monitoring accuracy performance.
         (1) KPI_{Genie} is introduced for evaluation and comparison, and it may not be available in actual networks.
         (2) The complexity, cost and delay of the monitoring schemes shall be reported by companies.

The above conclusion introduces an AI/ML model monitoring test dataset containing K test samples. The statistical result of K test samples calculated over the dataset can represent the monitoring accuracy performance. Therefore, the impact of a single test sample on the monitoring accuracy is limited, which can, to a certain extent, ensure the stability of the model monitoring performance evaluation results.

In conventional schemes, a method to improve the stability of CSI compression AI/ML model monitoring involves introducing a dataset with K test samples, and the AI/ML model monitoring accuracy is the statistical result of performance evaluation on these K samples. This method limits the impact of a single test sample on monitoring accuracy, thus ensuring the stability of the model monitoring performance evaluation results to a certain extent. However, the conventional schemes still have the following drawbacks.
(1) The conventional schemes lack a specific implementation as to how to obtain the dataset of K test samples, and when the party implementing the model monitoring should calculate the monitoring accuracy based on the dataset of K test samples.
(2) After calculating the monitoring accuracy based on the statistical result of the dataset of K test samples, the conventional schemes lack a specific implementation as to how to use the obtained monitoring accuracy to trigger AI/ML model monitoring reporting. The design of the triggering mechanism needs to be able to suppress the potential ping-pong effect: frequent AI/ML model change.

Based on the above, embodiments of this disclosure provide an information processing method and apparatus, and device, to address the problem that information processing schemes for model monitoring in related technologies cannot support accurate model decision-making operations. The method, apparatus and device are based on the same application concept. Since the principles by which the method, apparatus, and device solve the problem are similar, for the implementation of one of them, references may be made to the description of another of them, and repeated details will not be elaborated further.

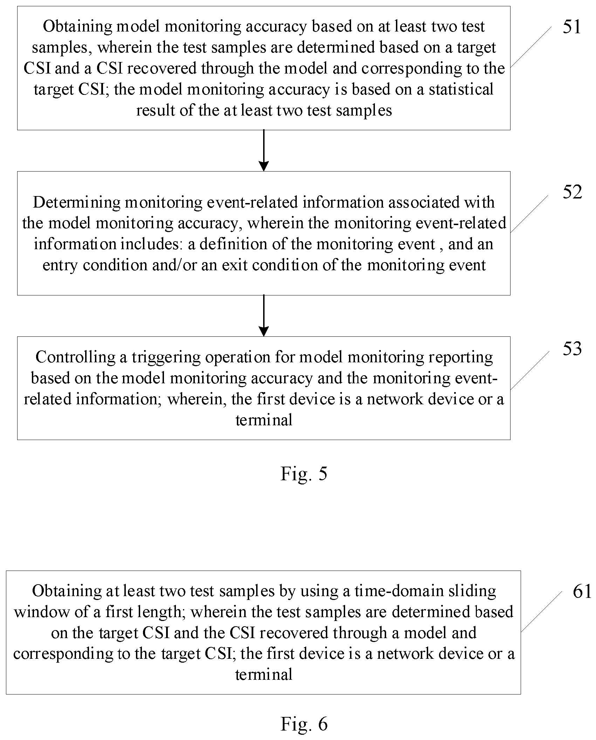

An information processing method according to an embodiment of this disclosure is performed by a first device. As shown in Fig. 5, the method includes:
step 51: obtaining model monitoring accuracy based on at least two test samples, wherein the test samples are determined based on a target channel state information (CSI) and a CSI recovered through the model and corresponding to the target CSI; the model monitoring accuracy is based on a statistical result of the at least two test samples;
step 52: determining monitoring event-related information associated with the model monitoring accuracy, wherein the monitoring event-related information includes: a definition of the monitoring event (indicating what event it is), and an entry condition and/or an exit condition of the monitoring event (indicating how to determine entry and/or exit from the monitoring event);
step 53: controlling a triggering operation for model monitoring reporting based on the model monitoring accuracy and the monitoring event-related information; wherein, the first device is a network device or a terminal.

Depending on whether the monitoring is conducted on the network side or the terminal side (i.e., the first device is a network device or a terminal), there may be a variety of possible target channel state information (i.e., the target CSI), e.g., (1) obtained from the reference signal related to CSI (e.g., the target CSI in Figs. 3 and 4 above); (2) obtained from the reference signal related to CSI and reported by the terminal (i.e., the terminal reporting will quantize and/or compress the CSI again to generate new errors, for example, the target CSI reported by the UE side and obtained by the network side in Fig. 2 above); of course, other possibilities may also exist, which are not limited here.

The "CSI recovered through a model and corresponding to the target CSI" can also be obtained in a variety of ways, e.g., (1) the output of the CSI recovery part of the AI/ML model, as shown in Fig. 2 above; (2) the output of the CSI recovery part of the AI/ML model is further sent to the terminal by the network side, as shown in Fig. 3 above; (3) the UE side recovers the CSI by using an alternative model, as shown in Fig. 4 above; of course, other possibilities may also exist, which are not limited here.

By obtaining the model monitoring accuracy based on at least two test samples; the test samples are determined based on the target channel state information (CSI) and the CSI recovered through the model and corresponding to the target CSI; the model monitoring accuracy is based on the statistical result of the at least two test samples; determining monitoring event-related information associated with the model monitoring accuracy; the monitoring event-related information includes: a definition of a monitoring event, and an entry condition and/or exit condition of the monitoring event; controlling the triggering operation for model monitoring reporting based on the model monitoring accuracy and the monitoring event-related information; wherein the first device is a network device or a terminal, the information processing method according to the embodiment of this disclosure can support the control triggered by model monitoring reporting based on model monitoring accuracy (i.e., monitoring results), thereby supporting accurate decision-making operations such as model switching, rollback, update, activation, and/or deactivation, effectively solving the problem that information processing schemes for model monitoring in related technologies cannot support accurate model decision-making operations.

The controlling the triggering operation for model monitoring reporting based on the model monitoring accuracy and the monitoring event-related information includes: in a case that a monitoring event status is that the model monitoring accuracy does not meet a usage condition, and the model monitoring accuracy meets the entry condition of the monitoring event, triggering an operation of model monitoring reporting; or, in a case that the monitoring event status is that the model monitoring accuracy meets the usage condition and the model monitoring accuracy meets the exit condition of the monitoring event, triggering an operation of model monitoring reporting.

This allows for the specific implementation of controlling the triggering operation for model monitoring reporting. Additionally, it enables special cases: entering or exiting a monitoring event can trigger model monitoring reporting, but this disclosure is not limited thereto.

Furthermore, the information processing method further includes: determining a monitoring reporting condition; the monitoring reporting condition includes: a reporting threshold and/or a reporting timer duration; (1) the triggering the operation of model monitoring reporting in a case that the monitoring event status is that the model monitoring accuracy does not meet the usage condition, and the model monitoring accuracy meets the entry condition of the monitoring event includes: triggering model monitoring reporting when the monitoring event status is that the model monitoring accuracy does not meet the usage condition (e.g., the model monitoring accuracy is less than a certain threshold), and a first number of times the model monitoring accuracy meets the entry condition of the monitoring event within the reporting timer duration is greater than the reporting threshold; wherein the reported content is used for indicating that a currently used model is expired; the first number of times is determined based on the real-time number of times the model monitoring accuracy meets the entry condition of the monitoring event (e.g., each time the entry condition is met, the first number of times is increased by 1), or, the first number of times is determined based on the real-time number of times the model monitoring accuracy meets the entry condition of the monitoring event and the real-time number of times the model monitoring accuracy meets the exit condition of the monitoring event (e.g., each time the entry condition is met, the first number of times is increased by 1, and each time the exit condition is met, the first number of times is decreased by 1), or, the first number of times refers to the consecutive number of times the model monitoring accuracy meets the entry condition of the monitoring event; and/or, (2) the triggering the operation of model monitoring reporting in a case that the monitoring event status is that the model monitoring accuracy meets the usage condition, and the model monitoring accuracy meets the exit condition of the monitoring event includes: triggering model monitoring reporting when the monitoring event status is that the model monitoring accuracy meets the usage condition (e.g., the model monitoring accuracy is greater than a certain threshold) and the second number of times the model monitoring accuracy meets the exit condition of the monitoring event within the reporting timer duration is greater than the reporting threshold; wherein reported content is used for indicating that a currently used model is expired; the second number of times is determined based on the real-time number of times the model monitoring accuracy meets the exit condition of the monitoring event (e.g., each time the exit condition is met, the second number of times is increased by 1), or, the second number of times is determined based on the real-time number of times the model monitoring accuracy meets the exit condition of the monitoring event and the real-time number of times the model monitoring accuracy meets the entry condition of the monitoring event (e.g., each time the entry condition is met, the second number of times is decreased by 1, and each time the exit condition is met, the second number of times is increased by 1), or, the second number of times refers to the consecutive number of times the model monitoring accuracy meets the exit condition of the monitoring event.

This allows for more accurate control over the triggering operation for model monitoring reporting. Specifically, this solution can have two tiers:
(1) The first tier is: the monitoring accuracy calculated based on K test samples (corresponding to at least two test samples mentioned above) in the current sliding window (i.e., the domain sliding window) is compared with the monitoring event-related information (the definition of the monitoring event, the entry condition and/or exit condition of the monitoring event) to determine the monitoring event status based on the current sliding window. Therefore, the first tier is to compare the monitoring accuracy calculated based on K test samples of a certain window with the monitoring event status threshold (including the thresholds of the entry condition and/or exit condition) to determine the status of the current single monitoring event (i.e., whether currently entering or exiting a certain monitoring event). The first tier can also be understood as: determining the single monitoring event status through the monitoring accuracy.
(2) The second tier is: after sliding the window, based on the monitoring accuracies calculated over K test samples of multiple windows respectively, the monitoring event statuses (entering and/or exiting a certain monitoring event) at multiple corresponding time moments may be obtained; by comparing the cumulative result of the monitoring event statuses (e.g., the number of times of entering and/or exiting a certain monitoring event) within a certain time period (defined by a timer) with the monitoring event trigger reporting threshold (e.g., the maximum threshold for the number of times of entering a certain monitoring event, the maximum threshold for the number of times of exiting a certain monitoring event, the maximum threshold for the consecutive number of times of entering a certain monitoring event, or the maximum threshold for the consecutive number of times of exiting a certain monitoring event, etc.), it is determined whether the model monitoring reporting is triggered. The second tier can also be understood as: based on the cumulative result of multiple monitoring event statuses within a certain period of time, it is determined whether the monitoring event triggers the model monitoring reporting.

Based on the above two tiers, the monitoring accuracy calculated based on the K test samples of a single window only determines the monitoring event status of the window at the current time moment. The cumulative result of the monitoring event statuses of multiple sliding windows is needed to determine whether to trigger model monitoring reporting. Furthermore, since the above two tiers determine whether to trigger model monitoring reporting based on the cumulative result of the monitoring event statuses observed over multiple sliding windows within a certain period of time, the possibility of false alarms caused by the single result perturbation of one or more sliding windows can be minimized, thereby reducing the possibility of the ping-pong effect of frequent model switching.

In addition, this solution may be a special case, e.g., instead of being based on the second tier, the solution determines whether to trigger reporting based only on the monitoring accuracy calculated over K test samples of a single window (which can be understood as triggering model monitoring reporting as long as entry into or exit from a certain monitoring event occurs).

The reporting timer duration can correspond to the "expiration timer" described below, which can be set to the length of one or more windows (i.e., time domain sliding windows), thus covering the first and second tiers mentioned above.

In the embodiments of this disclosure, the model includes a currently used model and at least one candidate model; the obtaining the model monitoring accuracy based on at least two test samples includes: obtaining a first model monitoring accuracy for the currently used model based on at least two test samples corresponding to the currently used model; and obtaining a second model monitoring accuracy for the candidate model based on at least two test samples corresponding to the candidate model.

This allows for simultaneous monitoring of the currently used model and at least one candidate model.

The monitoring event includes: a first monitoring event for the currently used model and a second monitoring event for the candidate model; and/or, the reporting threshold includes: a first reporting threshold for the currently used model and a second reporting threshold for the candidate model; and/or, the reporting timer duration includes: a first reporting timer duration for the currently used model and a second reporting timer duration for the candidate model.

This allows for accurate control over the triggering of model monitoring reporting based on monitoring of the currently used model and at least one candidate model.

In the embodiment of this disclosure, the triggering the operation of model monitoring reporting when the monitoring event status is that the model monitoring accuracy does not meet the usage condition and the model monitoring accuracy meets the entry condition of the monitoring event includes: (1) triggering model monitoring reporting when the first monitoring event status is that the first model monitoring accuracy does not meet the usage condition (e.g., the first model monitoring accuracy is less than a certain threshold) and the first condition is met, and the second monitoring event status is that the second model monitoring accuracy of any candidate model meets the usage condition (e.g., the second model monitoring accuracy is greater than a certain threshold) and a second condition is met; the reported content is used for indicating that model switching is to be done and the reported content carries the information of the candidate model; or, (2) triggering model monitoring reporting when the first monitoring event status is that the first model monitoring accuracy does not meet the usage condition (e.g., the first model monitoring accuracy is less than a certain threshold) and the first condition is met, and the second monitoring event status is that the second model monitoring accuracy of any candidate model does not meet the usage condition (e.g., the second model monitoring accuracy is less than a certain threshold) and the third condition is met; the reported content is used for indicating that model switching is to be done and the reported content carries the information of the candidate model; wherein, (1) the first condition includes: the third number of times the first model monitoring accuracy meets the entry condition of the first monitoring event within the first reporting timer duration is greater than the first reporting threshold; the third number of times is determined based on the real-time number of times the first model monitoring accuracy meets the entry condition of the first monitoring event (e.g., each time the entry condition is met, the third number of times is increased by 1), or the third number of times is determined based on the real-time number of times the first model monitoring accuracy meets the entry condition of the first monitoring event and the real-time number of times the first model monitoring accuracy meets the exit condition of the first monitoring event (e.g., each time the entry condition is met, the third number of times is increased by 1, and each time the exit condition is met, the third number of times is decreased by 1), or the third number of times refers to the consecutive number of times the first model monitoring accuracy meets the entry condition of the first monitoring event; (2) the second condition includes: the fourth number of times the second model monitoring accuracy meets the entry condition of the second monitoring event within the second reporting timer duration is greater than the second reporting threshold; the fourth number of times is determined based on the real-time number of times the second model monitoring accuracy meets the entry condition of the second monitoring event (e.g., each time the entry condition is met, the fourth number of times is increased by 1), or the fourth number of times is determined based on the real-time number of times the second model monitoring accuracy meets the entry condition of the second monitoring event and the real-time number of times the second model monitoring accuracy meets the exit condition of the second monitoring event (for example, each time the entry condition is met, the fourth number of times is increased by 1, and each time the exit condition is met, the fourth number of times is decreased by 1), or the fourth number of times refers to the consecutive number of times the second model monitoring accuracy meets the entry condition of the second monitoring event; (3) the third condition includes: the fifth number of times the second model monitoring accuracy meets the exit condition of the second monitoring event within the second reporting timer duration is greater than the second reporting threshold; the fifth number of times is determined based on the real-time number of times the second model monitoring accuracy meets the exit condition of the second monitoring event (for example, each time the exit condition is met, the fifth number of times is increased by 1), or the fifth number of times is determined based on the real-time number of times the second model monitoring accuracy meets the exit condition of the second monitoring event and the real-time number of times the second model monitoring accuracy meets the entry condition of the second monitoring event (for example, each time the entry condition is met, the fifth number of times is decreased by 1, and each time the exit condition is met, the fifth number of times is increased by 1), or the fifth number of times refers to the consecutive number of times the second model monitoring accuracy meets the exit condition of the second monitoring event.

This allows for accurate monitoring and reporting of model switching. The "triggering model monitoring reporting; the reported content is used for indicating that model switching is to be done" can be understood as: the currently used model has poor performance (triggering the model monitoring reporting condition for the currently used model), meanwhile at least one candidate model has good performance (triggering the model monitoring reporting condition for the candidate model), then a model switching is conducted; but this disclosure is not limited thereto. "The second model monitoring accuracy of any candidate model meets the usage condition" can also be implemented as: at least two candidate models have second model monitoring accuracy that meets the usage condition. In this case, the reported content can carry information about at least one of the at least two candidate models, e.g., the filtered target candidate model, but this disclosure is not limited thereto. Likewise, "the second model monitoring accuracy of any candidate model does not meet the usage condition" can also be implemented as: at least two candidate models have second model monitoring accuracy that does not meet the usage condition. In this case, the reported content can carry information about at least one of the at least two candidate models, e.g., the filtered target candidate model, but this disclosure is not limited thereto.

The triggering model monitoring reporting when the monitoring event status is that the model monitoring accuracy meets the usage condition and the model monitoring accuracy meets the exit condition of the monitoring event includes: (1) triggering model monitoring reporting when the first monitoring event status is that the first model monitoring accuracy meets the usage condition (e.g., the first model monitoring accuracy is greater than a certain threshold) and the fourth condition is met, and the second monitoring event status is that the second model monitoring accuracy of any candidate model meets the usage condition (e.g., the second model monitoring accuracy is greater than a certain threshold) and the fifth condition is met; the reported content is used for indicating that model switching is to be done and the reported content carries the information of the candidate model; or, (2) triggering model monitoring reporting when the first monitoring event status is that the first model monitoring accuracy meets the usage condition (e.g., the first model monitoring accuracy is greater than a certain threshold) and the fourth condition is met, and the second monitoring event status is that the second model monitoring accuracy of any candidate model does not meet the usage condition (e.g., the second model monitoring accuracy is less than a certain threshold), and the sixth condition is met; the reported content is used for indicating that model switching is to be done and the reported content carries the information of the candidate model; wherein, (1) the fourth condition includes: the sixth number of times the first model monitoring accuracy meets the exit condition of the first monitoring event within the first reporting timer duration is greater than the first reporting threshold; the sixth number of times is determined based on the real-time number of times the first model monitoring accuracy meets the exit condition of the first monitoring event (for example, each time the exit condition is met, the sixth number of times is increased by 1), or, the sixth number of times is determined based on the real-time number of times the first model monitoring accuracy meets the exit condition of the first monitoring event and the real-time number of times the first model monitoring accuracy meets the entry condition of the first monitoring event (for example, each time the entry condition is met, the sixth number of times is decreased by 1, and each time the exit condition is met, the sixth number of times is increased by 1), or, the sixth number of times refers to the consecutive number of times the first model monitoring accuracy meets the entry condition of the first monitoring event; (2) the fifth condition includes: the seventh number of times the second model monitoring accuracy meets the entry condition of the second monitoring event within the second reporting timer duration is greater than the second reporting threshold; the seventh number of times is determined based on the real-time number of times the second model monitoring accuracy meets the entry condition of the second monitoring event (for example, each time the entry condition is met, the seventh number of times is increased by 1), or, the seventh number of times is determined based on the real-time number of times the second model monitoring accuracy meets the entry condition of the second monitoring event and the real-time number of times the second model monitoring accuracy meets the exit condition of the second monitoring event (for example, each time the entry condition is met, the seventh number of times is increased by 1, and each time the exit condition is met, the seventh number of times is decreased by 1), or, the seventh number of times refers to the consecutive number of times the second model monitoring accuracy meets the entry condition of the second monitoring event; (3) the sixth condition includes: the eighth number of times the second model monitoring accuracy meets the exit condition of the second monitoring event within the second reporting timer duration is greater than the second reporting threshold; the eighth number of times is determined based on the real-time number of times the second model monitoring accuracy meets the exit condition of the second monitoring event (for example, each time the exit condition is met, the eighth number of times is increased by 1), or the eighth number of times is determined based on the real-time number of times the second model monitoring accuracy meets the exit condition of the second monitoring event and the real-time number of times the second model monitoring accuracy meets the entry condition of the second monitoring event (for example, each time the entry condition is met, the eighth number of times is decreased by 1, and each time the exit condition is met, the eighth number of times is increased by 1), or the eighth number of times refers to the consecutive number of times the second model monitoring accuracy meets the exit condition of the second monitoring event.

This approach also allows for accurate monitoring and reporting of model switching. The "triggering model monitoring reporting; the reported content is used for indicating that model switching is to be done" can be understood as: the currently used model has poor performance (triggering the model monitoring reporting condition for the currently used model), meanwhile at least one candidate model has good performance (triggering the model monitoring reporting condition for the candidate model), then a model switching is conducted; but this disclosure is not limited thereto. "The second model monitoring accuracy of any candidate model meets the usage condition" can also be implemented as: at least two candidate models have second model monitoring accuracy that meets the usage condition. In this case, the reported content can carry information about at least one of the at least two candidate models, e.g., the filtered target candidate model, but this disclosure is not limited thereto. Likewise, "the second model monitoring accuracy of any candidate model does not meet the usage condition" can also be implemented as: at least two candidate models have second model monitoring accuracy that does not meet the usage condition. In this case, the reported content can carry information about at least one of the at least two candidate models, e.g., the filtered target candidate model, but this disclosure is not limited thereto.

In the embodiment of this disclosure, the controlling the triggering operation for model monitoring reporting based on the model monitoring accuracy and the monitoring event-related information further includes: triggering the model monitoring reporting operation when the monitoring event status is that the model monitoring accuracy of the currently used model is less than the model monitoring accuracy of any candidate model; wherein reported content is used for indicating that model switching is to be done and the reported content carries information about the candidate model.

This allows for direct triggering of model monitoring reporting to switch models when the monitoring accuracy of the currently used model is less than that of any candidate model (e.g., the new model has better monitoring accuracy than the old model, so a model switching is initiated). "The model monitoring accuracy of the currently used model is less than that of any candidate model" can also be implemented as: the model monitoring accuracy of the currently used model is less than that of at least two candidate models. In this case, the reported content can carry information about at least one of the at least two candidate models, e.g., the filtered target candidate model, but this disclosure is not limited thereto.

Furthermore, the information processing method further includes: obtaining the at least two test samples by using a time-domain sliding window of a first length.

This allows for the accurate acquisition of at least two test samples.

In the embodiment of this disclosure, before obtaining the model monitoring accuracy based on at least two test samples, the method further includes: preprocessing the at least two test samples; wherein the preprocessing includes at least one of weighted processing or anomaly removal processing (e.g., removing certain abnormal samples).

This allows for improvement of the accuracy of the used test samples, thereby further improving the obtained model monitoring accuracy.

The entry condition and/or exit condition is determined based on the hysteresis parameter and the corresponding threshold.

This can, to some extent, avoid the ping-pong effect caused by frequent switching of model monitoring. Specifically, introducing a hysteresis parameter can mitigate the impact of observation perturbation on the decision; the value of the hysteresis parameter and/or threshold can vary depending on the conditions, and this disclosure is not limited in this regard.

In the embodiment of this disclosure, the monitoring event-related information is determined according to a predefinition in a protocol and/or a network-side configuration; and/or, the monitoring reporting condition is determined according to a predefinition in a protocol and/or a network-side configuration; and/or, the first length is determined according to a predefinition in a protocol and/or a network-side configuration; and/or, the sliding step size of the time-domain sliding window is determined according to a predefinition in a protocol and/or a network-side configuration; and/or, the hysteresis parameter is determined according to a predefinition in a protocol and/or a network-side configuration; and/or, the threshold is determined according to a predefinition in a protocol and/or a network-side configuration.

This can improve the flexibility of the solution implementation.

An embodiment of this disclosure further provides an information processing method performed by a first device. As shown in Fig. 6, the method includes:
step 61: obtaining at least two test samples by using a time-domain sliding window of a first length; wherein the test samples are determined based on the target CSI and the CSI recovered through a model and corresponding to the target CSI; the first device is a network device or a terminal.

Depending on whether the monitoring is conducted on the network side or the terminal side (i.e., the first device is a network device or a terminal), there may be a variety of possible target channel state information (i.e., the target CSI), e.g., (1) obtained from the reference signal related to CSI (e.g., the target CSI in Figs. 3 and 4 above); (2) obtained from the reference signal related to CSI and reported by the terminal (i.e., the terminal reporting will quantize and/or compress the CSI again to generate new errors, for example, the target CSI reported by the UE side and obtained by the network side in Fig. 2 above); of course, other possibilities may also exist, which are not limited here.

The "CSI recovered through a model and corresponding to the target CSI" can also be obtained in a variety of ways, e.g., (1) the output of the CSI recovery part of the AI/ML model, as shown in Fig. 2 above; (2) the output of the CSI recovery part of the AI/ML model is further sent to the terminal by the network side, as shown in Fig. 3 above; (3) the UE side recovers the CSI by using an alternative model, as shown in Fig. 4 above; of course, other possibilities may also exist, which are not limited here.

By obtaining at least two test samples by using a time-domain sliding window of a first length, wherein the test samples are determined based on a target CSI and a CSI recovered through a model and corresponding to the target CSI, the first device is a network device or a terminal, the information processing method according to the embodiment of this disclosure may support accurate acquisition of test samples, thereby improving the obtained model monitoring accuracy, and further supporting accurate control of model monitoring reporting based on the model monitoring accuracy (i.e., monitoring results), thus enabling accurate decision-making operations such as model switching, rollback, update, activation, and/or deactivation. This effectively solves the problem in related technologies that information processing schemes for model monitoring cannot support accurate model decision-making operations.

Furthermore, the information processing method further includes: preprocessing the at least two test samples; wherein the preprocessing includes at least one of weighted processing or anomaly removal processing (e.g., removing certain abnormal samples).

This allows for improvement of the accuracy of the used test samples, thereby further improving the obtained model monitoring accuracy.

The first length is determined according to the predefinition in a protocol and/or the network side configuration; and/or, the sliding step size of the time-domain sliding window is determined according to the predefinition in a protocol and/or the network side configuration.

This can improve the flexibility of the solution implementation.

The information processing method provided in the embodiments of this disclosure will be illustrated by examples below.

To address the aforementioned technical problems, an embodiment of this disclosure provides an information processing method, specifically an event-triggered information reporting model monitoring method. This method is mainly directed to the parts within the dashed boxes in Figs. 2 to 4, and solves: (1) how to obtain the K test samples from the data in time sequence (which can be understood as obtaining K intermediate KPI samples); (2) how the AI/ML model monitoring accuracy represented by the performance evaluation statistical result of these K samples should trigger AI/ML model monitoring reporting, so as to request the network side to make decisions on the activation, deactivation, update, rollback, and/or switching of the AI/ML model. Furthermore, the method can also solve the potential ping-pong effect problem of frequent changes in AI/ML model.

Additionally, this solution applies to both network-side AI/ML model monitoring and UE-side AI/ML model monitoring, but specific details may differ. For example, in UE-side AI/ML model monitoring, the network side may configure some relevant parameters for the UE side. Network-side AI/ML model monitoring does not have the aforementioned parameter configuration issues, but for the network-side AI/ML model monitoring, the design of the triggering signaling for the network-side to trigger the UE to perform "UE-side reporting the target CSI" may need to be considered. However, it could also be argued that the network side's determination as to when to trigger the UE to report is a specific implementation of the base station and can be left unrestricted. Therefore, this solution will be described as a universal approach (both network-side and UE-side) for AI/ML model monitoring, with further details for network-side AI/ML model monitoring and UE-side AI/ML model monitoring respectively.

This solution mainly includes the following:
1. The AI/ML model monitoring entity (which may belong to the network side or the UE side; corresponding to the first device being a network device or a terminal) establishes a time-domain sliding window of length K (corresponding to the first length mentioned above) to obtain a test dataset of K test sample data. The monitoring accuracy (corresponding to the model monitoring accuracy mentioned above) is based on the statistical result of these K test samples (corresponding to the model monitoring accuracy mentioned above being based on the statistical result of at least two test samples).

Optionally, the window length K is predefined in a protocol, configured on the network-side, or configured in a combined manner of being predefined in a protocol and configured on the network-side (corresponding to the first length being determined according to the predefinition in a protocol and/or the network-side configuration).

Optionally, a time-domain sliding step size Nstep of the sliding window (i.e., the time-domain sliding window) is predefined in a protocol, configured on the network side, or configured in a combined manner of being predefined in a protocol and configured on the network-side (corresponding to the sliding step size of the time-domain sliding window being determined according to the predefinition in a protocol and/or the network-side configuration).

Optionally, the AI/ML model monitoring entity can preprocess the K test samples (including operations to improve the accuracy of the calculation results). For example, the preprocessing includes, but is not limited to: taking a subset containing K ' (<K) test samples for calculating the monitoring accuracy, weighting the test samples when calculating the monitoring accuracy based on the statistical result of the K test samples, etc. (e.g., cleaning the data), which corresponds to the above preprocessing of at least two test samples; wherein, the preprocessing includes at least one of weighted processing or anomaly removal processing.

2. Define monitoring event-related information of AI/ML model monitoring entity (network side or UE side). The monitoring event-related information may include: the definition of the monitoring event, and the entry condition and exit condition of the monitoring event. It is considered that entry into the monitoring event is met when the monitoring accuracy calculated based on a time-domain sliding window of length K meets the entry condition. It is considered that exit from the monitoring event is met when the monitoring accuracy calculated based on a time-domain sliding window of length K meets the exit condition.

Optionally, the entry condition and/or exit condition include threshold parameters (corresponding to the threshold mentioned above), which are predefined by the protocol, configured on the network side, or configured in a combined manner of being predefined in a protocol and configured on the network-side (corresponding to the threshold mentioned above being determined according to the predefinition in a protocol and/or the network-side configuration).

3. Define the condition under which monitoring event of the AI/ML model monitoring entity (network side or UE side) triggers AI/ML model monitoring reporting (corresponding to the monitoring reporting condition mentioned above).

Optionally, the threshold parameters (corresponding to the above reporting threshold) for the monitoring event of the monitoring entity to trigger AI/ML model monitoring reporting is predefined in a protocol, configured on the network side, or configured in a combined manner of being predefined in a protocol and configured on the network-side (corresponding to the above monitoring reporting condition being determined according to the predefinition in a protocol and/or the network-side configuration).

4. The AI/ML model monitoring entity (network side or UE side) uses the monitoring accuracy calculated over a time-domain sliding window of length K and the defined monitoring event to determine the entry into and exit from the monitoring event, and then, based on the result of the monitoring event determination and the condition for triggering AI/ML model monitoring reporting, determines whether to trigger AI/ML model monitoring reporting (corresponding to controlling the triggering operation for model monitoring reporting based on the model monitoring accuracy, monitoring event-related information and monitoring reporting condition).

Based on the process described in Figs. 2 and 3 above, the following is a detailed introduction of this solution.

Method 1: Network-side AI/ML model monitoring, based on the target CSI reported by the UE side (corresponding to Fig. 2 above, the first device is the network device);

Part 1: The network side establishes a sliding window of length K (length K means containing K test samples) to obtain a test dataset of K test sample data. The monitoring accuracy is based on the statistical result of these K test samples (corresponding to the above-mentioned using of a time-domain sliding window of a first length to obtain at least two test samples; the model monitoring accuracy is based on the statistical result of the at least two test samples). The sliding window length K is predefined in a protocol, configured by the network side, or configured in a combined manner of being predefined in a protocol and configured on the network-side (corresponding to the above-mentioned first length being determined according to a predefinition in a protocol and/or a network-side configuration). The sliding step size Nstep of the sliding window is predefined in a protocol, configured by the network side, or configured in a combined manner of being predefined in a protocol and configured on the network-side (corresponding to the above-mentioned sliding step size of the time-domain sliding window being determined according to a predefinition in a protocol and/or a network-side configuration). Optionally, the network side can preprocess the test data samples in the sliding window. For example, the network side can discard some samples that it considers inaccurate or unrepresentative (corresponding to the above-mentioned anomaly removal processing), that is, select a subset with a cardinality of K ' (K ' < K) for the subsequent calculation; or, the network side can weight each data sample (corresponding to the above-mentioned weighting process) to change the data sample's influence on the final statistical result.

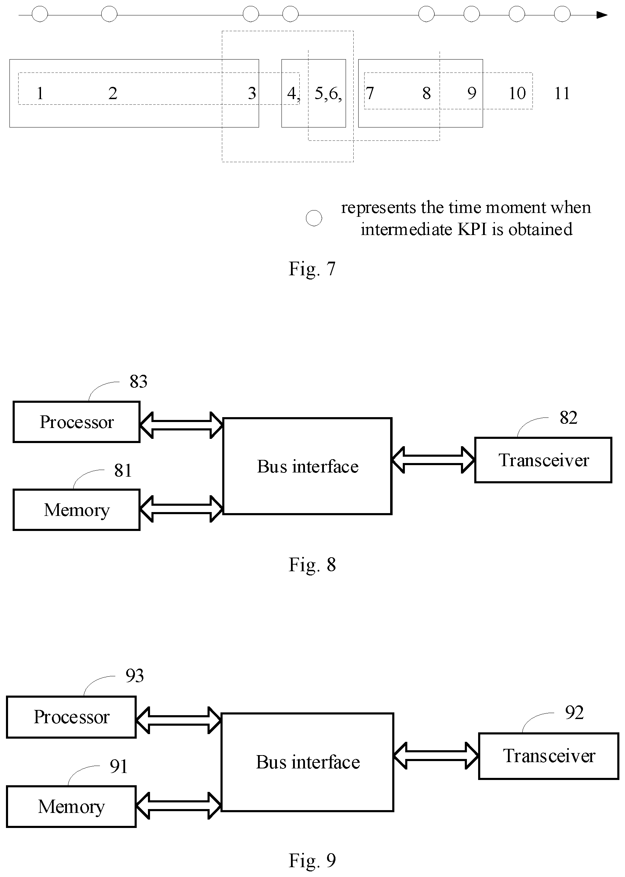

Taking Fig. 2 as an example, one test sample refers to: one intermediate KPI calculated based on one CSI recovered through an AI/ML model (the CSI recovered through an AI/ML model is the output of the network side AI/ML model CSI recovery part based on the compressed CSI received by the network side and reported by the UE side) and one corresponding target CSI obtained by the network side and reported by the UE side (for example, the target CSI reported by the UE side can be based on the Physical Uplink Shared Channel (PUSCH), can be based on the traditional enhanced type II codebook CSI reporting (for example, configurations of the parameter configuration (PC) 6 and/or PC8), can be based on similar enhanced type II codebook CSI reporting (based on more refined codebook configuration), can be based on the SRS sent by the UE side, etc.). Specifically, from a timeline perspective, the obtaining time of each intermediate KPI is a discrete point on the timeline. Since there are various ways to report compressed CSI and/or target CSI (periodic, semiperiodic, aperiodic) and flexible reporting strategies (reporting a target CSI every time a compressed CSI is reported, or reporting multiple compressed CSIs and then reporting the target CSIs corresponding to the previously reported compressed CSIs together, etc.), the gap between the obtaining time moments of any two intermediate KPIs can be any number greater than or equal to zero. Assume, as shown in Fig. 7 (obtaining time moments of intermediate KPIs and sliding window are illustrated on the timeline): window length K=3, sliding step size Nstep =3 (corresponding to the solid box in the figure), or, window length K=4, sliding step size Nstep =2 (corresponding to the dashed box in the figure). It should be noted that the above discrete points (i.e., the obtaining time moments of intermediate KPIs) are not necessarily equally spaced, and one discrete point can correspond to multiple obtaining time moments of intermediate KPIs. For example, obtaining time moments 4 to 7 in Fig. 7 all correspond to the fourth discrete point from left to right in the figure (i.e., the obtaining time moments of the 4th to 7th intermediate KPIs are the same, which corresponds to the above-mentioned situation of "reporting the target CSIs corresponding to the previously reported compressed CSIs together", that is, the 4th to 7th intermediate KPIs are accumulated and reported together, and the corresponding obtaining time moments of the intermediate KPIs are the same).

In this solution, it is pre-assumed that the method for the UE-side to feedback and report the compressed CSI and the method for the UE-side to report the target CSI are both determined and their corresponding relationship is clear. Considering the delay of the AI/ML model monitoring entity in calculating the intermediate KPI, it can be considered that the obtaining time moment of each intermediate KPI on the time line = max [the time of obtaining the CSI recovered through the AI/ML model (the output of the CSI recovery part of the AI/ML model based on the compressed CSI reported by the UE-side), and the corresponding time (corresponding to the time of obtaining the CSI recovered through the AI/ML model) when the UE-side reports the target CSI] + the delay of calculating the intermediate KPI, but this disclosure is not limited thereto.

Part 2: the network side defines AI/ML model monitoring events Event 1 (e.g., when the network side AI/ML model monitoring accuracy is greater than a certain threshold, and the entry condition is met, it can be understood the event is valid) and Event 2 (e.g., the network side AI/ML model monitoring accuracy is less than a certain threshold).
(1) Define network-side event Event1 (network-side AI/ML model monitoring accuracy is greater than a certain threshold).

The network should:
1) consider that the entry condition of Event1 is met when the following Condition1-1 is met. Condition1-1 is as shown below;
2) consider that the exit condition of Event 1 is met when the following Condition 1-2 is met. Condition 1-2 is as shown below.

Condition1-1 (entry condition) can be expressed as the following inequality:
M_{NW} - H_{ys} > Thresh1 ; which corresponds to: the entry condition being determined based on the hysteresis parameter and the corresponding threshold.

Condition1-2 (exit condition) can be expressed as the following inequality:
M_{NW} + H_{ys} < Thresh1 ; which corresponds to: the exit condition being determined based on the hysteresis parameter and the corresponding threshold.

The variables in the above formulas are defined as follows.

M_{NW} denotes the AI/ML model monitoring accuracy calculated by the network side (corresponding to the model monitoring accuracy mentioned above). This calculated value does not include any offset value.

H_{ys} denotes the hysteresis parameter of Event1. This parameter is predefined in a protocol, configured on the network-side, or configured in a combined manner of being predefined in a protocol and configured on the network-side. The hysteresis parameter can be understood as a margin or a confidence interval in statistics (e.g., 3σ). A decision can be made when the difference between the observed value (corresponding to the model monitoring accuracy) and the threshold is significantly greater than the hysteresis parameter. Introducing the hysteresis parameter can reduce the impact of observation perturbation on the decision.

Thresh1 denotes the threshold parameter of Event1, which is predefined in a protocol, configured on the network side, or configured in a combined manner of being predefined in a protocol and configured on the network side.

M_{NW}, H_{ys} and Thresh1 have the same dimension.

Meanwhile, (2) define network-side event Event2 (network-side AI/ML model monitoring accuracy is less than a certain threshold).

The network should:
1) consider that the entry condition of Event2 is met when the following Condition2-1 is met. Condition2-1 is as shown below;
2) consider that the exit condition of Event2 is met when the following Condition2-2 is met. Condition2-2 is as shown below.

Condition2-1 (entry condition) can be expressed as the following inequality:
M_{NW} + H_{ys}' < Thresh2 ; which corresponds to: the entry condition being determined based on the hysteresis parameter and the corresponding threshold.

Condition2-2 (exit condition) can be expressed as the following inequality:
M_{NW} - H_{ys}' > Thresh2 ; which corresponds to: the exit condition being determined based on the hysteresis parameter and the corresponding threshold.

The variables in the above formulas are defined as follows.

M_{NW} denotes the AI/ML model monitoring accuracy calculated on the network side. This calculated value does not include any offset.

H_{ys}' denotes the hysteresis parameter of Event2, which is predefined in a protocol, configured on the network side, or configured in a combined manner of being predefined in a protocol and configured on the network side.

Thresh2 denotes the threshold parameter of Event2, which is predefined in a protocol, configured on the network side, or a combination of both.

M_{NW}, H_{ys}' and Thresh2 have the same dimension.

Part 3: Define the condition for AI/ML model monitoring reporting triggered by AI/ML model monitoring event Event1 and/or Event2 (corresponding to the monitoring reporting condition mentioned above). The triggering condition for AI/ML model monitoring reporting is related to the entry and exit status of Event1 (and/or Event2) monitored by the network side, the threshold parameters for the occurrence of monitoring event Event1 (and/or Event2) configured by the network side (e.g., the maximum or minimum number of occurrences of the event, the maximum or minimum consecutive number of occurrences of the event, etc.), and the timer parameter corresponding to the monitoring event Event1 (and/or Event2) (corresponding to the reporting timer duration mentioned above); the timer parameter is predefined in a protocol, configured on the network side, or configured in a combined manner of being predefined in the protocol and configured on the network side.

The following is an example of a solution of this approach.

Implementation Example 1a: Network-side AI/ML model monitoring. Based on the fact that the number of times of entering and/or exiting a monitoring event in one or more sliding windows exceeds a threshold, the currently used AI/ML model M1 is determined to be expired (here, AI/ML model M1 can refer to a pair of models: UE-side CSI generation model, and network-side CSI recovery model).

The network side defines the maximum number of occurrences of monitoring event Event2 N_{max_count_E2} for AI/ML model M1 (corresponding to the aforementioned reporting threshold). This parameter is predefined in a protocol, configured on the network side, or a combination of both. The network side defines an expiration timer associated with the N_{max_count_E2}(corresponding to the aforementioned reporting timer duration). This parameter is predefined in a protocol, configured on the network side, or a combination of both. It can be configured that N_{max_count_E2} = 1. Under this configuration, whether a monitoring event triggers AI/ML model monitoring reporting may be determined by the network side monitoring accuracy calculated from K data samples in a single sliding window. The expiration timer is an expiration counter that counts the occurrences of monitoring event Event2. When the counter reaches zero (count-down) or reaches the upper limit (count-up), the previously counted occurrences of monitoring event Event2 are reset to zero and the counter is restarted.

The network side monitors the number of occurrences of AI/ML model M1 Event2, wherein M_{NW} is calculated using the sliding window described above. When the network side calculates and monitors that the entry condition (Condition2-1) of Event2 is met based on the current sliding window (i.e., the domain sliding window), the network side increments the current number of occurrences of Event2 by 1; when the network side calculates and monitors that the exit condition (Condition2-2) of Event2 is met based on the current sliding window, the network side decrements the current number of occurrences of Event2 by 1. When the expiration timer has not yet reached zero (count-down) or has not reached its upper limit (count-up), and the number of occurrences of the Event2 recorded by the network side is greater than the maximum number of occurrences of the monitoring event Event2 N_{max_count_E2}, the network side triggers AI/ML model monitoring reporting (which can be reporting between modules within the network side, e.g., the monitoring module reporting to the decision module), to report that the currently used AI/ML model M1 is expired (corresponding to the above-mentioned operations: triggering model monitoring reporting when the monitoring event status is that the model monitoring accuracy does not meet the usage condition, and the first number of times the model monitoring accuracy meets the entry condition of the monitoring event within the reporting timer duration is greater than the reporting threshold; wherein reported content is used for indicating that a currently used model is expired; the first number of times is determined based on the real-time number of times the model monitoring accuracy meets the entry condition of the monitoring event and the real-time number of times the model monitoring accuracy meets the exit condition of the monitoring event).

Implementation Example 1b: Network-side AI/ML model monitoring. Based on the fact that the number of times of entering a monitoring event in single or multiple sliding windows exceeds a threshold, the currently used AI/ML model M1 is determined to be expired.

This implementation is similar to Implementation Example 1a. The difference is that the occurrence of the exit condition (Condition2-2) of Event2 is not considered: only when the network side monitors that the number of occurrences or the consecutive number of occurrences of the entry condition (Condition2-1) of Event2, calculated by the network side based on the current sliding window, is greater than the maximum number of occurrences N_{max _count_E2} or maximum consecutive number of occurrences N_{max _consec_count_E2} of the monitoring event Event2, the network side triggers AI/ML model monitoring reporting, to report that the currently used AI/ML model M1 is expired. This corresponds to the above-mentioned operation: triggering model monitoring reporting in a case that the monitoring event status is that the model monitoring accuracy does not meet the usage condition, and a first number of times the model monitoring accuracy meets the entry condition of the monitoring event within the reporting timer duration is greater than the reporting threshold; wherein reported content is used for indicating that a currently used model is expired; the first number of times is determined based on the real-time number of times the model monitoring accuracy meets the entry condition of the monitoring event, or, the first number of times refers to the consecutive number of times the model monitoring accuracy meets the entry condition of the monitoring event.

Implementation Example 1c (can be used in combination with Implementation Example 1a or Implementation Example 1b): Network-side AI/ML model monitoring. Based on the fact that the number of times of entering a monitoring event in single or multiple sliding windows exceeds a threshold, the currently used AI/ML model M1 is determined to be expired, and the counter counting the number of consecutive entries into the monitoring event Event2 is reset to zero.

This implementation is similar to Implementation Example 1a or Implementation Example 1b. The difference is that when the network side calculates the monitoring accuracy based on the sliding window and finds that the exit condition (Condition 2-2) of Event 2 has been met consecutively for a number of times N_{max _consec_count_E2out}, the network side resets the recorded number of occurrences of Event 2 to zero and resets the expiration timer to its maximum value (count-down)/zero (count-up). The number of times the exit condition of Event 2 is consecutively met N_{max _consec_count_E2out} is predefined in a protocol, configured on the network side, or a combination of both.

The above implementation examples 1a-1c are all network-side AI/ML model monitoring, and are based on several possible solutions for event-triggered monitoring reporting.

Implementation Example 2: Network-side AI/ML model monitoring. Based on the fact that the number of times of entering and/or exiting a monitoring event in one or more sliding windows exceeds a threshold, it is determined to switch the currently used network-side CSI recovery AI/ML model.

The network side monitors the currently used network-side CSI recovery AI/ML model C1, and simultaneously monitors an unused, potential network-side CSI recovery AI/ML model C2 (because the network side also possesses CSI recovery model C2, it can process the received compressed CSI, which is fed back by the UE-side, through model C2 to obtain the recovered CSI based on C2, and then calculate the intermediate KPI in conjunction with the target CSI reported by the UE). It should be noted that this example uses one potential CSI recovery model C2 (corresponding to the candidate model mentioned above), but this implementation can also be applied to the scenario with multiple potential CSI recovery models C3, C4, ..., CN, this disclosure is not limited thereto.

The network side configures parameters related to Event1 and/or Event2 for C1 and C2 respectively. These parameters are predefined in the protocol, configured by the network side itself, or a combination of both. The network side defines the maximum number of occurrences of monitoring event Event2 N_{max _count_E2} for C1, and defines the minimum number of occurrences of monitoring event Event1 N_{max _count_E1} for C2. These parameters are predefined in the protocol, configured by the network side itself, or a combination of both. The network side defines expiration timers (corresponding to the reporting timer duration) associated with the above N_{max _count_E2} and N_{max _count_E1} (corresponding to the reporting threshold). These parameters are predefined by the protocol, configured by the network side itself, or a combination of both. It can be configured that N_{max _count_E2} = 1. At this time, whether to trigger the AI/ML model monitoring reporting is determined by the K data samples in a single sliding window. It can also be configured that N_{min_count_E1} = 1. At this time, whether to trigger the AI/ML model monitoring reporting is determined by the K data samples in a single sliding window.

The network side monitors the number of occurrences of Event2 related to C1, wherein M_{NW} is calculated using the sliding window described above. When the network side calculates based on the current sliding window and monitors that the entry condition (Condition2-1) of Event2 is met, the network side increments the current number of occurrences of Event2 by 1; when the network side calculates based on the current sliding window and monitors that the exit condition (Condition2-2) of Event2 is met, the network side decrements the current number of occurrences of Event2 by 1.

The network side monitors the number of occurrences of Event 1 related to C2, wherein M_{NW} is calculated using the sliding window described above. When the network side calculates based on the current sliding window and monitors that the entry condition (Condition1-1) of Event 1 is met, the network side increments the current number of occurrences of Event 1 by 1; when the network side calculates based on the current sliding window and monitors that the exit condition (Condition1-2) of Event 1 is met, the network side decrements the current number of occurrences of Event 1 by 1.

When the expiration timer configured for C1 has not yet reached zero (count-down) or has not yet reached its upper limit (count-up), and the current occurrence of Event2 recorded by the network side for C1 is greater than its configured N_{max _count_E2} , and the expiration timer configured for C2 has not yet reached zero (count-down) or has not yet reached its upper limit (count-up), and the current occurrence of Event1 recorded by the network side for C2 is greater than its configured N_{max _count_E1}, the network side triggers AI/ML model monitoring reporting, to report that the performance of the currently used CSI recovery AI/ML model C1 is inferior to that of the CSI recovery AI/ML model C2, and C2 is reported as a candidate switching model; this corresponds to the above-mentioned operations: in a case that the first monitoring event status is that the monitoring accuracy of the first model does not meet the usage condition and the first condition is met; and the second monitoring event status is that the second model monitoring accuracy of any candidate model meets the usage condition and a second condition is met, triggering the model monitoring reporting; the reported content is used for indicating that model switching is to be done and the reported content carries the information of the candidate model; wherein, the first condition includes: the third number of times the monitoring accuracy of the first model meets the entry condition of the first monitoring event within the first reporting timer duration is greater than the first reporting threshold; the third number of times is determined based on the real-time number of times the monitoring accuracy of the first model meets the entry condition of the first monitoring event and the real-time number of times the monitoring accuracy of the first model meets the exit condition of the first monitoring event; the second condition includes: the fourth number of times the second model monitoring accuracy meets the entry condition of the second monitoring event within the second reporting timer duration is greater than the second reporting threshold; the fourth number of times is determined based on the real-time number of times the second model monitoring accuracy meets the entry condition of the second monitoring event and the real-time number of times the second model monitoring accuracy meets the exit condition of the second monitoring event.

The implementation example 2 can also have variations similar to the above implementation examples 1a-1c, that is, using a combination of conditions such as different event entry condition and/or exit condition, the maximum or minimum (consecutive) number of occurrences of event, counter initialization or reset, etc., to define the trigger for monitoring reporting, which will not be elaborated here.

Method 2: UE-side AI/ML model monitoring, based on recovered CSI sent by the network-side (corresponding to Fig. 3 above, the first device is the terminal).

Part 1: The UE side establishes a time-domain sliding window of length K (length K means containing K test samples) to obtain a test dataset of K test sample data. The monitoring accuracy is based on the statistical result of these K test samples (corresponding to the usage of a time-domain sliding window of a first length to obtain at least two test samples; the model monitoring accuracy is based on the statistical result of the at least two test samples). The sliding window length K is predefined in a protocol, configured on the network side (e.g., based on RRC configuration), or configured in a combined manner of being predefined in the protocol and configured on the network side (corresponding to the above-mentioned first length being determined according to a predefinition in a protocol and/or network side configuration). The sliding step size Nstep of the sliding window in the time domain is predefined in a protocol, configured on the network side (e.g., based on RRC configuration), or configured in a combined manner of being predefined in the protocol and configured on the network side (corresponding to the above-mentioned sliding step size of the time-domain sliding window being determined according to a predefinition in a protocol and/or network side configuration).

Taking Fig. 3 as an example, one test sample refers to one intermediate KPI calculated based on one target CSI and the corresponding recovered CSI sent by the network-side and obtained by the UE (for example, the sending of the recovered CSI by the network-side can be based on the Physical Downlink Shared Channel (PDSCH), or the precoded Channel State Information Reference Signal (CSI-RS), etc.). The examples of the intermediate KPI obtaining time, sliding window length K, and sliding window step size Nstep are similar to those in Method 1 and will not be repeated here.

Part 2: the UE side defines AI/ML model monitoring events Event3 (e.g., the UE side AI/ML model monitoring accuracy is greater than a certain threshold) and Event4 (e.g., the UE side AI/ML model monitoring accuracy is less than a certain threshold).
(1) Define UE-side event Event3 (UE-side AI/ML model monitoring accuracy is greater than a certain threshold).

UE should:
1) consider that the entry condition of Event3 is met when the following Condition3-1 is met. Condition3-1 is as shown below;
2) consider that the exit condition of Event3 is met when the following Condition3-2 is met. Condition3-2 is as shown below.

Condition3-1 (entry condition) can be expressed as the following inequality:
M_{UE} - H_{ys}'' > Thresh3 ; which corresponds to: the entry condition being determined based on the hysteresis parameter and the corresponding threshold.

Condition3-2 (exit condition) can be expressed as the following inequality:
M_{UE} + H_{ys}'' < Thresh3 ; which corresponds to: the exit condition being determined based on the hysteresis parameter and the corresponding threshold.

The variables in the above formulas are defined as follows.

M_{UE} refers to the AI/ML model monitoring accuracy calculated on the UE side (corresponding to the model monitoring accuracy mentioned above). This calculated value does not include any offset value.

H_{ys}'' refers to the hysteresis parameter of Event3, which is predefined in a protocol, configured on the network side (e.g., based on RRC configuration), or configured in a combined manner of being predefined in the protocol and configured on the network side.

Thresh3 refers to the threshold parameter of Event3, which is predefined in a protocol, configured on the network side (e.g., based on RRC configuration), or configured in a combined manner of being predefined in the protocol and configured on the network side.

M_{UE}, ${H}_{ys}^{"}$ and Thresh3 have the same dimension.

Meanwhile, (2) define UE-side event Event4 (UE-side AI/ML model monitoring accuracy is less than a certain threshold).

UE should:
1) consider that the entry condition of Event4 is met when the following Condition4-1 is met. Condition4-1 is as shown below;
2) consider that the exit condition of Event4 is met when the following condition Condition4-2 is met. Condition4-2 is as shown below.

Condition4-1 (entry condition) can be expressed as the following inequality:
M_{UE} + H_{ys}‴ < Thresh4 ; which corresponds to: the entry condition being determined based on the hysteresis parameter and the corresponding threshold.

Condition4-2 (exit condition) can be expressed as the following inequality:
M_{UE} - H_{ys}‴ > Thresh4 ; which corresponds to: the exit condition being determined based on the hysteresis parameter and the corresponding threshold.

The variables in the above formulas are defined as follows.

M_{UE} refers to the AI/ML model monitoring accuracy calculated on the UE side. This calculated value does not include any offset.

H_{ys}‴ refers to the hysteresis parameter of Event4, which is predefined in a protocol, configured on the network side (e.g., based on RRC configuration), or configured in a combined manner of being predefined in the protocol and configured on the network side.

Thresh4 refers to the threshold parameter of Event4, which is predefined in a protocol, configured on the network side (e.g., based on RRC configuration), or configured in a combined manner of being predefined in the protocol and configured on the network side.

M_{UE}, ${H}_{ys}^{‴}$ and Thresh4 have the same dimension.

Part 3: Define the condition for AI/ML model monitoring reporting triggered by AI/ML model monitoring event Event3 and/or Event4 (corresponding to the monitoring reporting condition mentioned above). The triggering condition for AI/ML model monitoring reporting is related to the entry and exit status of Event3 (and/or Event4) monitored on the UE side, the threshold parameters for the occurrence of monitoring event Event3 (and/or Event4) configured on the network side (e.g., the maximum or minimum number of occurrences of the event, the maximum or minimum consecutive number of occurrences of the event, etc.), and the timer parameter corresponding to the monitoring event Event3 (and/or Event4) (corresponding to the reporting timer duration mentioned above).

The following is an example of a solution under this approach.

Implementation Example 3: UE-side AI/ML model monitoring (based on recovered CSI sent by the network-side). It is determined that the currently used AI/ML model M1 is expired (here, AI/ML model M1 can refer to a pair of models: UE-side CSI generation model, and network-side CSI recovery model).

The UE side defines the maximum number of occurrences of monitoring event Event4 N_{max _count_E4} for AI/ML model M1 (corresponding to the aforementioned reporting threshold). This parameter is predefined in a protocol, configured on the network side (e.g., based on RRC configuration), or a combination of both. The UE side defines an expiration timer (corresponding to the aforementioned reporting timer duration) associated with N_{max _count_E4}. This parameter is predefined in a protocol, configured by the network side (e.g., based on RRC configuration), or a combination of both.

The UE monitors the number of occurrences of AI/ML model M1 Event4, wherein M_{UE} is calculated based on the sliding window described above. When the UE calculates based on the current sliding window (i.e., the domain sliding window) and monitors that the entry condition (Condition4-1) of Event 4 is met, the UE increments the current number of occurrences of Event 4 by 1; when the UE calculates based on the current sliding window and monitors that the exit condition (Condition4-2) of Event 4 is met, the UE decrements the current number of occurrences of Event 4 by 1. When the expiration timer has not yet reached zero (count-down) or has not reached its upper limit (count-up), and the number of occurrences of Event4 recorded on the UE side is greater than the maximum number of occurrences of Event4 N_{max _count_E4}, the UE side triggers AI/ML model monitoring reporting, to report that the currently used AI/ML model M1 is expired, and request the network to make a decision (corresponding to the above-mentioned operation: triggering model monitoring reporting in a case that the monitoring event status is that the model monitoring accuracy does not meet the usage condition, and a first number of times the model monitoring accuracy meets the entry condition of the monitoring event within the reporting timer duration is greater than the reporting threshold; wherein reported content is used for indicating that a currently used model is expired; the first number of times is determined based on the real-time number of times the model monitoring accuracy meets the entry condition of the monitoring event and the real-time number of times the model monitoring accuracy meets the exit condition of the monitoring event).

The above implementation example 3 can also have variations similar to the above implementation examples 1a-1c, that is, using a combination of conditions such as different event entry condition and/or exit condition, the maximum or minimum (consecutive) number of occurrences of event, counter initialization or reset, etc., to define the trigger for monitoring reporting, which will not be elaborated here.

Method 3: UE-side AI/ML model monitoring. Based on the model on the UE side that serves as an alternative to the network-side CSI recovery part AI/ML model (corresponding to Fig. 4 above, the first device is the terminal).

Part 1: The UE side establishes a time-domain sliding window of length K (length K means containing K test samples) to obtain a test dataset of K test sample data. The monitoring accuracy is based on the statistical result of these K test samples (corresponding to the usage of a time-domain sliding window of a first length to obtain at least two test samples; the model monitoring accuracy is based on the statistical result of the at least two test samples). The sliding window length K is predefined in a protocol, configured on the network side (e.g., based on RRC configuration), or configured in a combined manner of being predefined in the protocol and configured on the network side (corresponding to the above-mentioned first length being determined according to a predefinition in a protocol and/or network side configuration). The sliding step size Nstep of the sliding window in the time domain is predefined in a protocol, configured on the network side (e.g., based on RRC configuration), or configured in a combined manner of being predefined in the protocol and configured on the network side (corresponding to the above-mentioned sliding step size of the time-domain sliding window being determined according to a predefinition in a protocol and/or network side configuration).

Taking Fig. 4 as an example, one test sample refers to one intermediate KPI calculated based on one target CSI and the corresponding CSI recovered on the UE-side using the alternative model. The example of the intermediate KPI obtaining time, sliding window length K, and sliding window sliding step size Nstep is similar to that of Method 1, and will not be repeated here.

Part 2: The UE side defines AI/ML model monitoring events Event3 (e.g., UE-side AI/ML model monitoring accuracy is greater than a certain threshold) and Event4 (e.g., UE-side AI/ML model monitoring accuracy is less than a certain threshold). The definitions of Event3 and Event4 are the same as those in Part 2 of Method 2, and will not be repeated here, but the values of the configured parameters may be different.

Part 3: Define the condition for AI/ML model monitoring reporting triggered by AI/ML model monitoring event Event3 and/or Event4 (corresponding to the monitoring reporting condition mentioned above). The triggering condition for AI/ML model monitoring reporting is related to the entry and exit status of Event3 (and/or Event4) monitored on the UE side, the threshold parameters for the occurrence of monitoring event Event3 (and/or Event4) configured on the network side (e.g., the maximum or minimum number of occurrences of the event, the maximum or minimum consecutive number of occurrences of the event, etc.), and the timer parameter corresponding to the monitoring event Event3 (and/or Event4) (corresponding to the reporting timer duration mentioned above).

Implementation Example 4: UE-side AI/ML model monitoring (based on the model on the UE side that serves as an alternative to the network-side CSI recovery part AI/ML model). It is determined that the currently used AI/ML model M1 is expired (here, AI/ML model M1 can refer to a pair of models: UE-side CSI generation model, and UE-side CSI recovery model, that is: the UE-side AI/ML model and the model on the UE side that serves as an alternative to the network-side CSI recovery part AI/ML model).
(1) The relevant parts of this implementation example are the same as those of implementation example 3, and will not be repeated here.
(2) The implementation example 4 can also have variations similar to the implementation examples 1a-1c, that is, using a combination of conditions such as different event entry condition and/or exit condition, the maximum or minimum (consecutive) number of occurrences of event, counter initialization or reset, etc., to define the trigger for monitoring reporting, which will not be elaborated here.

Implementation Example 5a: UE-side AI/ML model monitoring (based on the model on the UE side that serves as an alternative to the network-side CSI recovery part AI/ML model). It is determined to switch the currently used UE-side CSI generation AI/ML model.

The UE side monitors the currently used UE-side CSI generation AI/ML model D1, and simultaneously monitors the unused, potential UE-side CSI generation AI/ML model D2 (because the UE side also possesses CSI generation model D2, the UE side can process the target CSI through the model D2 to obtain a compressed CSI based on D2, and then process the CSI compressed by D2 through the alternative model to the CSI recovery part AI/ML model to obtain a new CSI, which is then used in conjunction with the target CSI to calculate the intermediate KPI). It is noted that, this example uses one potential CSI generation model D2 (corresponding to the candidate model mentioned above), but the implementation can also be applied to the scenario with multiple potential CSI generation models D3, D4, ..., DN.

The UE configures parameters related to Event3 and/or Event4 for D1 and D2 respectively. These parameters are predefined in a protocol, configured on the network side (e.g., based on RRC configuration), or a combination of both. The UE defines the maximum number of occurrences of monitoring event Event4 N_{max _count_E4} for D1 and the minimum number of occurrences of monitoring event Event3 N_{max _count_E3} for D2. These parameters are predefined in a protocol, configured on the network side (e.g., based on RRC configuration), or a combination of both. The UE defines expiration timers (corresponding to the reporting timer duration) associated with the N_{max _count_E4} and N_{max _count_E3} (corresponding to the reporting threshold). These parameters are predefined in a protocol, configured on the network side (e.g., based on RRC configuration), or a combination of both.

The UE monitors the number of occurrences of Event 4 related to D1, wherein M_{NW} is calculated according to the sliding window described above. When the UE calculates based on the current sliding window and monitors that the entry condition (Condition4-1) of Event 4 is met, the UE increments the current number of occurrences of Event 4 by 1; when the UE calculates based on the current sliding window and monitors that the exit condition (Condition4-2) of Event 4 is met, the UE decrements the current number of occurrences of Event 4 by 1.

The UE monitors the number of occurrences of Event 3 related to D2, wherein M_{NW} is calculated based on the sliding window described above. When the UE calculates based on the current sliding window and monitors that the entry condition (Condition3-1) of Event 3 is met, the UE increments the current number of occurrences of Event 3 by 1; when the UE calculates based on the current sliding window and monitors that the exit condition (Condition3-2) of Event 3 is met, the UE decrements the current number of occurrences of Event 3 by 1.

When the expiration timer configured for D1 has not yet reached zero (count-down) or has not yet reached its upper limit (count-up), and the current number of occurrences of Event 4 recorded by the UE side for D1 is greater than the configured N_{max _count_E4}, and the expiration timer configured for D2 has not yet reached zero (count-down) or has not yet reached its upper limit (count-up), and the current number of occurrences of Event 3 recorded by the network side for D2 is greater than configured N_{max _count_E3} , the UE side triggers AI/ML model monitoring reporting, to report that the performance of the currently used CSI generation AI/ML model D1 is inferior to that of the CSI generation AI/ML model D2, and D2 is reported as a candidate switching model, to request the network to make a decision; this corresponds to the above-mentioned operations: in a case that the first monitoring event status is that the monitoring accuracy of the first model does not meet the usage condition and the first condition is met; and the second monitoring event status is that the second model monitoring accuracy of any candidate model meets the usage condition and a second condition is met, triggering a model monitoring reporting operation; the reported content is used for indicating that model switching is to be done and the reported content carries the information of the candidate model; wherein, the first condition includes: the third number of times the monitoring accuracy of the first model meets the entry condition of the first monitoring event within the first reporting timer duration is greater than the first reporting threshold; the third number of times is determined based on the real-time number of times the monitoring accuracy of the first model meets the entry condition of the first monitoring event and the real-time number of times the monitoring accuracy of the first model meets the exit condition of the first monitoring event; the second condition includes: the fourth number of times the second model monitoring accuracy meets the entry condition of the second monitoring event within the second reporting timer duration is greater than the second reporting threshold; the fourth number of times is determined based on the real-time number of times the second model monitoring accuracy meets the entry condition of the second monitoring event and the real-time number of times the second model monitoring accuracy meets the exit condition of the second monitoring event.

The implementation example 5a can also have variations similar to the implementation examples 1a-1c, that is, using a combination of conditions such as different event entry condition and/or exit condition, the maximum or minimum (consecutive) number of occurrences of event, counter initialization or reset, etc., to define the trigger for monitoring reporting, which will not be elaborated here.

Implementation Example 5b: UE-side AI/ML model monitoring (based on the model on the UE side that serves as an alternative to the network-side CSI recovery part AI/ML model). Based on entry events of Event 3 and Event 4, it is determined to switch the currently used UE-side CSI generation AI/ML model.

This implementation example can be considered a special case of implementation example 5a. Both N_{max _count_E4} for D1 and N_{max _count_E3} for D2 are configured to 1. The thresholds thresh_{E4in} in the entry condition of D1 Event4 and thresh_{E3in} in the entry condition of D2 Event3 are jointly configured. Then the combined event "the entry condition of Event4 is met and the entry condition of Event3 is met" is equivalent to the event "D2's monitoring accuracy is greater than D1's monitoring accuracy by X = thresh_{E3in} - thresh_{E4in} ". Using this configuration, when the monitoring accuracy of a potential AI/ML model is greater than that of the current model by X, the monitoring reporting can be triggered to report the monitoring accuracy of candidate model D2 and/or various models, and request the network to make a decision (corresponding to the operation: triggering model monitoring reporting when the monitoring event status is that the model monitoring accuracy of the currently used model is less than the model monitoring accuracy of any candidate model; wherein the reported content is used for indicating that model switching is to be done and carries information about the candidate model).

It should be noted that the relevant content of the above examples can be referred to each other, and repeated parts will be omitted. In addition, the numerical settings of the various thresholds mentioned above can be the same or different, which is not limited here.

Therefore, the solution provided by the embodiments of this disclosure has the following advantages.
1. Sliding window-based AI/ML model monitoring allows the monitoring entity to continuously monitor the AI/ML model over time without requiring the network side to trigger the initialization of AI/ML model monitoring using signaling (Media Access Control-Control Element (MAC CE) or Downlink Control Information (DCI)), thus saving signaling overhead. Especially when the monitoring entity is the UE, a preferred example of this solution is that the network side initiates RRC configuration signaling to the UE to configure sliding window-related parameters (monitoring configuration); upon receiving the RRC configuration, the UE will initiate perpetual, continuous, sliding window-based AI/ML model monitoring.
2. AI/ML model monitoring and calculations based on sliding windows are quite flexible; different sliding window lengths and sliding window step sizes can be configured for different UE capabilities (such as computing power, monitoring accuracy requirements, monitoring timeliness requirements, etc.), which can prevent the calculation of sliding windows from being too frequent, or make the changes in monitoring accuracy calculated after sliding the window more significant; that is, the window length and sliding window step size can be flexibly configured and jointly optimized according to the needs and the computing power of the terminal.
3. Defining information related to monitoring event allows the AI/ML model monitoring entity to determine to trigger AI/ML model monitoring reporting based on the entry into and exit from monitoring event and threshold parameters related to the monitoring event (such as the maximum or minimum number of occurrences of monitoring event, the maximum or minimum consecutive number of occurrences of monitoring event, etc.). This can effectively reduce perturbations and misjudgments, and solve the ping-pong effect of frequent switching of AI/ML model monitoring.

An embodiment of this disclosure further provides an information processing device, which is a first device. As shown in Fig. 8, the device includes a memory 81, a transceiver 82, and a processor 83.

Memory 81 is used for storing a computer program; transceiver 82 is used for sending and receiving data under the control of processor 83; processor 83 is used for reading the computer program in memory 81 and performing the following operations:
obtaining model monitoring accuracy based on at least two test samples, wherein the test samples are determined based on a target channel state information (CSI) and a CSI recovered through a model and corresponding to the target CSI, the model monitoring accuracy is based on a statistical result of the at least two test samples;
determining monitoring event-related information associated with the model monitoring accuracy, wherein the monitoring event-related information includes: a definition of a monitoring event, and an entry condition and/or exit condition of the monitoring event; and
controlling a triggering operation for model monitoring reporting based on the model monitoring accuracy and the monitoring event-related information;
wherein the first device is a network device or a terminal.

By obtaining the model monitoring accuracy based on at least two test samples; the test samples are determined based on the target channel state information (CSI) and the CSI recovered through the model and corresponding to the target CSI; the model monitoring accuracy is based on the statistical result of the at least two test samples; determining monitoring event-related information associated with the model monitoring accuracy; the monitoring event-related information includes: a definition of a monitoring event, and an entry condition and/or exit condition of the monitoring event; controlling the triggering operation for model monitoring reporting based on the model monitoring accuracy and the monitoring event-related information; wherein the first device is a network device or a terminal, the information processing device according to the embodiment of this disclosure can support the control triggered by model monitoring reporting based on model monitoring accuracy (i.e., monitoring results), thereby supporting accurate decision-making operations such as model switching, rollback, update, activation, and/or deactivation, effectively solving the problem that information processing schemes for model monitoring in related technologies cannot support accurate model decision-making operations.

Specifically, transceiver 82 is used for receiving and sending data under the control of processor 83.

In Fig. 8, the bus architecture may include any number of interconnected buses and bridges, specifically linking various circuits of one or more processors represented by processor 83 and memory represented by memory 81. The bus architecture may also link various other circuits such as peripheral devices, voltage regulators, and power management circuits, which are well known in the art and therefore will not be described further herein. The bus interface provides an interface. The transceiver 82 may be multiple elements, including a transmitter and a receiver, providing a unit for communicating with various other devices over transmission media, including wireless channels, wired channels, optical fibers, etc. Processor 83 is responsible for managing the bus architecture and general processing, and memory 81 may store data used by processor 83 during operation.

The processor 83 can be a central processing unit (CPU), an application-specific integrated circuit (ASIC), a field-programmable gate array (FPGA), or a complex programmable logic device (CPLD). The processor can also adopt a multi-core architecture.

The processor is used for executing any of the methods described in the embodiments of this disclosure by invoking a computer program stored in memory, according to the obtained executable instructions. The processor and memory may also be physically separated.

It should be noted that when the first device is implemented as a terminal, it may also include a user interface that can communicate with the bus interface; for different user devices, the user interface may also be an interface that can connect to external or internal devices, including but not limited to keypad, display, speaker, microphone, joystick, etc.

The controlling the triggering operation for model monitoring reporting based on the model monitoring accuracy and the monitoring event-related information includes: in a case that a monitoring event status is that the model monitoring accuracy does not meet a usage condition, and the model monitoring accuracy meets the entry condition of the monitoring event, triggering an operation of model monitoring reporting; or, in a case that the monitoring event status is that the model monitoring accuracy meets the usage condition and the model monitoring accuracy meets the exit condition of the monitoring event, triggering an operation of model monitoring reporting.

Further, the operations also include: determining a monitoring reporting condition; the monitoring reporting condition includes: a reporting threshold and/or a reporting timer duration; the triggering the operation of model monitoring reporting in a case that the monitoring event status is that the model monitoring accuracy does not meet the usage condition, and the model monitoring accuracy meets the entry condition of the monitoring event includes: (1) triggering model monitoring reporting in a case that the monitoring event status is that the model monitoring accuracy does not meet the usage condition, and a first number of times the model monitoring accuracy meets the entry condition of the monitoring event within the reporting timer duration is greater than the reporting threshold; wherein reported content is used for indicating that a currently used model is expired; the first number of times is determined based on the real-time number of times the model monitoring accuracy meets the entry condition of the monitoring event, or, the first number of times is determined based on the real-time number of times the model monitoring accuracy meets the entry condition of the monitoring event and the real-time number of times the model monitoring accuracy meets the exit condition of the monitoring event, or, the first number of times refers to a consecutive number of times the model monitoring accuracy meets the entry condition of the monitoring event; and/or, (2) the triggering model monitoring reporting when the monitoring event status is that the model monitoring accuracy meets the usage condition and the model monitoring accuracy meets the exit condition of the monitoring event includes: triggering model monitoring reporting when the monitoring event status is that the model monitoring accuracy meets the usage condition and the second number of times the model monitoring accuracy meets the exit condition of the monitoring event within the reporting timer duration is greater than the reporting threshold; wherein reported content is used for indicating that a currently used model is expired; the second number of times is determined based on the real-time number of times the model monitoring accuracy meets the exit condition of the monitoring event, or, the second number of times is determined based on the real-time number of times the model monitoring accuracy meets the exit condition of the monitoring event and the real-time number of times the model monitoring accuracy meets the entry condition of the monitoring event, or, the second number of times refers to the consecutive number of times the model monitoring accuracy meets the exit condition of the monitoring event.

In the embodiment of this disclosure, the model includes the currently used model and at least one candidate model; the step of obtaining the model monitoring accuracy based on at least two test samples includes: obtaining a first model monitoring accuracy for the currently used model based on at least two test samples corresponding to the currently used model; and obtaining a second model monitoring accuracy for the candidate model based on at least two test samples corresponding to the candidate model.

The monitoring event includes: a first monitoring event for the currently used model and a second monitoring event for the candidate model; the reporting threshold includes: a first reporting threshold for the currently used model and a second reporting threshold for the candidate model; the reporting timer duration includes: a first reporting timer duration for the currently used model and a second reporting timer duration for the candidate model.

In the embodiment of this disclosure, the triggering model monitoring reporting when the monitoring event status is that the model monitoring accuracy does not meet the usage condition and the model monitoring accuracy meets the entry condition of the monitoring event includes: (1) triggering model monitoring reporting when the first monitoring event status is that the first model monitoring accuracy does not meet the usage condition and the first condition is met; and the second monitoring event status is that the second model monitoring accuracy of any candidate model meets the usage condition and a second condition is met; the reported content is used for indicating that model switching is to be done and the reported content carries the information of the candidate model; or, (2) triggering model monitoring reporting when the first monitoring event status is that the first model monitoring accuracy does not meet the usage condition and the first condition is met; and the second monitoring event status is that the second model monitoring accuracy of any candidate model does not meet the usage condition and the third condition is met; the reported content is used for indicating that model switching is to be done and the reported content carries the information of the candidate model; wherein, (1) the first condition includes: the third number of times the first model monitoring accuracy meets the entry condition of the first monitoring event within the first reporting time is greater than the first reporting threshold; the third number of times is determined based on the real-time number of times the first model monitoring accuracy meets the entry condition of the first monitoring event, or the third number of times is determined based on the real-time number of times the first model monitoring accuracy meets the entry condition of the first monitoring event and the real-time number of times the first model monitoring accuracy meets the exit condition of the first monitoring event, or the third number of times refers to the consecutive number of times the first model monitoring accuracy meets the entry condition of the first monitoring event; (2) the second condition includes: the fourth number of times the second model monitoring accuracy meets the entry condition of the second monitoring event within the second reporting timer duration is greater than the second reporting threshold; the fourth number of times is determined based on the real-time number of times the second model monitoring accuracy meets the entry condition of the second monitoring event, or the fourth number of times is determined based on the real-time number of times the second model monitoring accuracy meets the entry condition of the second monitoring event and the real-time number of times the second model monitoring accuracy meets the exit condition of the second monitoring event, or the fourth number of times refers to the consecutive number of times the second model monitoring accuracy meets the entry condition of the second monitoring event; (3) the third condition includes: the fifth number of times the second model monitoring accuracy meets the exit condition of the second monitoring event within the second reporting timer duration is greater than the second reporting threshold; the fifth number of times is determined based on the real-time number of times the second model monitoring accuracy meets the exit condition of the second monitoring event, or the fifth number of times is determined based on the real-time number of times the second model monitoring accuracy meets the exit condition of the second monitoring event and the real-time number of times the second model monitoring accuracy meets the entry condition of the second monitoring event, or the fifth number of times refers to the consecutive number of times the second model monitoring accuracy meets the exit condition of the second monitoring event.

The triggering model monitoring reporting when the monitoring event status is that the model monitoring accuracy meets the usage condition and the model monitoring accuracy meets the exit condition of the monitoring event includes: (1) triggering model monitoring reporting when the first monitoring event status is that the first model monitoring accuracy meets the usage condition and the fourth condition is met; and the second monitoring event status is that the second model monitoring accuracy of any candidate model meets the usage condition and the fifth condition is met; the reported content is used for indicating that model switching is to be done and the reported content carries the information of the candidate model; or, (2) triggering model monitoring reporting when the first monitoring event status is that the first model monitoring accuracy meets the usage condition and the fourth condition is met; and the second monitoring event status is that the second model monitoring accuracy of any candidate model meets the usage condition and the fifth condition is met; the reported content is used for indicating that model switching is to be done and the reported content carries the information of the candidate model; wherein, (1) the fourth condition includes: the sixth number of times the first model monitoring accuracy meets the exit condition of the first monitoring event within the first reporting timer duration is greater than the first reporting threshold; the sixth number of times is determined based on the real-time number of times the first model monitoring accuracy meets the exit condition of the first monitoring event, or, the sixth number of times is based on the real-time number of times the first model monitoring accuracy meets the exit condition of the first monitoring event and the real-time number of times the first model monitoring accuracy meets the entry condition of the first monitoring event, or, the sixth number of times refers to the consecutive number of times the first model monitoring accuracy meets the entry condition of the first monitoring event; (2) the fifth condition includes: the seventh number of times the second model monitoring accuracy meets the entry condition of the second monitoring event within the second reporting timer duration is greater than the second reporting threshold; the seventh number of times is determined based on the real-time number of times the second model monitoring accuracy meets the entry condition of the second monitoring event, or, the seventh number of times is determined based on the real-time number of times the second model monitoring accuracy meets the entry condition of the second monitoring event and the real-time number of times the second model monitoring accuracy meets the exit condition of the second monitoring event, or, the seventh number of times refers to a consecutive number of times the second model monitoring accuracy meets the entry condition of the second monitoring event; (3) the sixth condition includes: an eighth number of times the second model monitoring accuracy meets the exit condition of the second monitoring event within the second reporting timer duration is greater than the second reporting threshold; the eighth number of times is determined based on the real-time number of times the second model monitoring accuracy meets the exit condition of the second monitoring event, or the eighth number of times is determined based on the real-time number of times the second model monitoring accuracy meets the exit condition of the second monitoring event and the real-time number of times the second model monitoring accuracy meets the entry condition of the second monitoring event, or the eighth number of times refers to a consecutive number of times the second model monitoring accuracy meets the exit condition of the second monitoring event.

Furthermore, the step of controlling the triggering operation for model monitoring reporting based on the model monitoring accuracy and monitoring event-related information further includes: triggering the model monitoring reporting operation when the monitoring event status is that the model monitoring accuracy of the currently used model is less than the model monitoring accuracy of any candidate model; wherein reported content is used for indicating that model switching is to be done and the reported content carries information about the candidate model.

In the embodiment of this disclosure, the operations further include: using a time-domain sliding window of a first length to obtain the at least two test samples.

Furthermore, the operations also include: preprocessing the at least two test samples before obtaining the model monitoring accuracy based on the at least two test samples; wherein the preprocessing includes at least one of weighted processing or anomaly removal processing.

The entry condition and/or exit condition is determined based on the hysteresis parameter and the corresponding threshold.

In the embodiment of this disclosure, the monitoring event-related information is determined according to a predefinition in a protocol and/or a network-side configuration; and/or, the monitoring reporting condition is determined according to a predefinition in a protocol and/or a network-side configuration; and/or, the first length is determined according to a predefinition in a protocol and/or a network-side configuration; and/or, the sliding step size of the time-domain sliding window is determined according to a predefinition in a protocol and/or a network-side configuration; and/or, the hysteresis parameter is determined according to a predefinition in a protocol and/or a network-side configuration; and/or, the threshold is determined according to a predefinition in a protocol and/or a network-side configuration.

It should be noted that the device provided in this embodiment can implement all the method steps implemented in the above method embodiment and achieve the same technical effect. Therefore, the parts and beneficial effects that are the same as those in the method embodiment will not be described in detail here.

An embodiment of this disclosure further provides an information processing device, which is a first device. As shown in Fig. 9, the device includes a memory 91, a transceiver 92, and a processor 93.

Memory 91 is used for storing a computer program; transceiver 92 is used for sending and receiving data under the control of processor 93; processor 93 is used for reading the computer program in memory 91 and performing the following operation:
obtaining at least two test samples by using a time-domain sliding window of a first length;
wherein the test samples are determined based on a target CSI and a CSI recovered through a model and corresponding to the target CSI;
the first device is a network device or a terminal.

By obtaining at least two test samples by using a time-domain sliding window of a first length, wherein the test samples are determined based on a target CSI and a CSI recovered through a model and corresponding to the target CSI, the first device is a network device or a terminal, the information processing method according to the embodiment of this disclosure may support accurate acquisition of test samples, thereby improving the obtained model monitoring accuracy, and further supporting accurate control of model monitoring reporting based on the model monitoring accuracy (i.e., monitoring results), thus enabling accurate decision-making operations such as model switching, rollback, update, activation, and/or deactivation. This effectively solves the problem in related technologies that information processing schemes for model monitoring cannot support accurate model decision-making operations.

Specifically, transceiver 92 is used for receiving and sending data under the control of processor 93.

In Fig. 9, the bus architecture can include any number of interconnected buses and bridges, specifically linking various circuits of one or more processors represented by processor 93 and memory represented by memory 91. The bus architecture can also link various other circuits such as peripheral devices, voltage regulators, and power management circuits, which are well known in the art and therefore will not be described further herein. The bus interface provides an interface. Transceiver 92 can be multiple elements, including a transmitter and a receiver, providing units for communicating with various other devices over transmission media, including wireless channels, wired channels, optical fibers, etc. Processor 93 is responsible for managing the bus architecture and general processing, and memory 91 can store data used by processor 93 during operation.

The processor 93 can be a central processing unit (CPU), an application-specific integrated circuit (ASIC), a field-programmable gate array (FPGA), or a complex programmable logic device (CPLD). The processor can also adopt a multi-core architecture.

The processor is used for executing any of the methods described in the embodiments of this disclosure by invoking a computer program stored in memory, according to the obtained executable instructions. The processor and memory may also be physically separated.

It should be noted that when the first device is implemented as a terminal, it may also include a user interface that can communicate with the bus interface; for different user devices, the user interface may also be an interface that can connect to external or internal devices, including but not limited to keypad, display, speaker, microphone, joystick, etc.

Furthermore, the operation also includes: preprocessing the at least two test samples; wherein the preprocessing includes at least one of weighted processing or anomaly removal processing.

In the embodiment of this disclosure, the first length is determined according to a predefinition in a protocol and/or a network-side configuration; and/or, the sliding step size of the time-domain sliding window is determined according to a predefinition in a protocol and/or a network-side configuration.

It should be noted that the device provided in this embodiment can implement all the method steps implemented in the above method embodiment and achieve the same technical effect. Therefore, the parts and beneficial effects that are the same as those in the method embodiment will not be described in detail here.

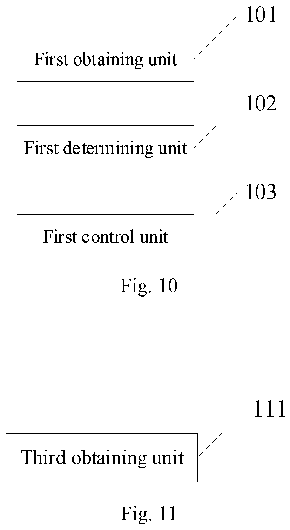

An embodiment of this disclosure further provides an information processing apparatus applied to a first device; as shown in Fig. 10, the information processing apparatus including:
a first obtaining unit 101, configured to obtain model monitoring accuracy based on at least two test samples, wherein the test samples are determined based on a target channel state information (CSI) and a CSI recovered through a model and corresponding to the target CSI; the model monitoring accuracy is based on a statistical result of the at least two test samples;
a first determining unit 102, configured to determine monitoring event-related information associated with the model monitoring accuracy, wherein the monitoring event-related information includes: a definition of a monitoring event, and an entry condition and/or exit condition of the monitoring event; and
a first control unit 103, configured to control a triggering operation for model monitoring reporting based on the model monitoring accuracy and the monitoring event-related information;
wherein the first device is a network device or a terminal.

By obtaining the model monitoring accuracy based on at least two test samples; the test samples are determined based on the target channel state information (CSI) and the CSI recovered through the model and corresponding to the target CSI; the model monitoring accuracy is based on the statistical result of the at least two test samples; determining monitoring event-related information associated with the model monitoring accuracy; the monitoring event-related information includes: a definition of a monitoring event, and an entry condition and/or exit condition of the monitoring event; controlling the triggering operation for model monitoring reporting based on the model monitoring accuracy and the monitoring event-related information; wherein the first device is a network device or a terminal, the information processing apparatus according to the embodiment of this disclosure can support the control triggered by model monitoring reporting based on model monitoring accuracy (i.e., monitoring results), thereby supporting accurate decision-making operations such as model switching, rollback, update, activation, and/or deactivation, effectively solving the problem that information processing schemes for model monitoring in related technologies cannot support accurate model decision-making operations.

The controlling the triggering operation for model monitoring reporting based on the model monitoring accuracy and the monitoring event-related information includes: in a case that a monitoring event status is that the model monitoring accuracy does not meet a usage condition, and the model monitoring accuracy meets the entry condition of the monitoring event, triggering an operation of model monitoring reporting; or, in a case that the monitoring event status is that the model monitoring accuracy meets the usage condition and the model monitoring accuracy meets the exit condition of the monitoring event, triggering an operation of model monitoring reporting.

Further, the information processing apparatus further includes: a second determining unit, configured to determine a monitoring reporting condition; the monitoring reporting condition includes: a reporting threshold and/or a reporting timer duration; (1) the triggering the operation of model monitoring reporting in a case that the monitoring event status is that the model monitoring accuracy does not meet the usage condition, and the model monitoring accuracy meets the entry condition of the monitoring event includes: triggering model monitoring reporting in a case that the monitoring event status is that the model monitoring accuracy does not meet the usage condition, and a first number of times the model monitoring accuracy meets the entry condition of the monitoring event within the reporting timer duration is greater than the reporting threshold; wherein reported content is used for indicating that a currently used model is expired; the first number of times is determined based on the real-time number of times the model monitoring accuracy meets the entry condition of the monitoring event, or, the first number of times is determined based on the real-time number of times the model monitoring accuracy meets the entry condition of the monitoring event and the real-time number of times the model monitoring accuracy meets the exit condition of the monitoring event, or, the first number of times refers to a consecutive number of times the model monitoring accuracy meets the entry condition of the monitoring event; and/or, (2) the triggering model monitoring reporting when the monitoring event status is that the model monitoring accuracy meets the usage condition and the model monitoring accuracy meets the exit condition of the monitoring event includes: triggering model monitoring reporting when the monitoring event status is that the model monitoring accuracy meets the usage condition and the second number of times the model monitoring accuracy meets the exit condition of the monitoring event within the reporting timer duration is greater than the reporting threshold; wherein reported content is used for indicating that a currently used model is expired; the second number of times is determined based on the real-time number of times the model monitoring accuracy meets the exit condition of the monitoring event, or, the second number of times is determined based on the real-time number of times the model monitoring accuracy meets the exit condition of the monitoring event and the real-time number of times the model monitoring accuracy meets the entry condition of the monitoring event, or, the second number of times refers to the consecutive number of times the model monitoring accuracy meets the exit condition of the monitoring event.

The model includes a currently used model and at least one candidate model; obtaining the model monitoring accuracy based on at least two test samples includes: obtaining a first model monitoring accuracy for the currently used model based on at least two test samples corresponding to the currently used model; and obtaining a second model monitoring accuracy for the candidate model based on at least two test samples corresponding to the candidate model.

In the embodiment of this disclosure, the monitoring event includes: a first monitoring event for the currently used model and a second monitoring event for the candidate model; the reporting threshold includes: a first reporting threshold for the currently used model and a second reporting threshold for the candidate model; the reporting timer duration includes: a first reporting timer duration for the currently used model and a second reporting timer duration for the candidate model.

The triggering model monitoring reporting when the monitoring event status is that the model monitoring accuracy does not meet the usage condition and the model monitoring accuracy meets the entry condition of the monitoring event includes: (1) triggering model monitoring reporting when the first monitoring event status is that the first model monitoring accuracy does not meet the usage condition and the first condition is met; and the second monitoring event status is that the second model monitoring accuracy of any candidate model meets the usage condition and a second condition is met; the reported content is used for indicating that model switching is to be done and the reported content carries the information of the candidate model; or, (2) triggering model monitoring reporting when the first monitoring event status is that the first model monitoring accuracy does not meet the usage condition and the first condition is met; and the second monitoring event status is that the second model monitoring accuracy of any candidate model meets the usage condition and a second condition is met; the reported content is used for indicating that model switching is to be done and the reported content carries the information of the candidate model; wherein, (1) the first condition includes: the third number of times the first model monitoring accuracy meets the entry condition of the first monitoring event within the first reporting timer duration is greater than the first reporting threshold; the third number of times is determined based on the real-time number of times the first model monitoring accuracy meets the entry condition of the first monitoring event, or, the third number of times is based on the real-time number of times the first model monitoring accuracy meets the entry condition of the first monitoring event and the real-time number of times the first model monitoring accuracy meets the exit condition of the first monitoring event, or the third number of times refers to the consecutive number of times the first model monitoring accuracy meets the entry condition of the first monitoring event; (2) the second condition includes: the fourth number of times the second model monitoring accuracy meets the entry condition of the second monitoring event within the second reporting timer duration is greater than the second reporting threshold; the fourth number of times is determined based on the real-time number of times the second model monitoring accuracy meets the entry condition of the second monitoring event, or the fourth number of times is determined based on the real-time number of times the second model monitoring accuracy meets the entry condition of the second monitoring event and the real-time number of times the second model monitoring accuracy meets the exit condition of the second monitoring event, or the fourth number of times refers to the consecutive number of times the second model monitoring accuracy meets the entry condition of the second monitoring event; (3) the third condition includes: the fifth number of times the second model monitoring accuracy meets the exit condition of the second monitoring event within the second reporting timer duration is greater than the second reporting threshold; the fifth number of times is determined based on the real-time number of times the second model monitoring accuracy meets the exit condition of the second monitoring event, or the fifth number of times is determined based on the real-time number of times the second model monitoring accuracy meets the exit condition of the second monitoring event and the real-time number of times the second model monitoring accuracy meets the entry condition of the second monitoring event, or the fifth number of times refers to the consecutive number of times the second model monitoring accuracy meets the exit condition of the second monitoring event.

In the embodiment of this disclosure, the triggering model monitoring reporting when the monitoring event status is that the model monitoring accuracy meets the usage condition and the model monitoring accuracy meets the exit condition of the monitoring event includes: (1) triggering model monitoring reporting when the first monitoring event status is that the first model monitoring accuracy meets the usage condition and the fourth condition is met, and the second monitoring event status is that the second model monitoring accuracy of any candidate model meets the usage condition and the fifth condition is met; the reported content is used for indicating that model switching is to be done and the reported content carries the information of the candidate model; or, (2) triggering model monitoring reporting when the first monitoring event status is that the first model monitoring accuracy meets the usage condition and the fourth condition is met, and the second monitoring event status is that the second model monitoring accuracy of any candidate model does not meet the usage condition and the sixth condition is met; the reported content is used for indicating that model switching is to be done and the reported content carries the information of the candidate model; wherein, (1) the fourth condition includes: the sixth number of times the first model monitoring accuracy meets the exit condition of the first monitoring event within the first reporting timer duration is greater than the first reporting threshold; the sixth number of times is determined based on the real-time number of times the first model monitoring accuracy meets the exit condition of the first monitoring event, or, the sixth number of times is based on the real-time number of times the first model monitoring accuracy meets the exit condition of the first monitoring event and the real-time number of times the first model monitoring accuracy meets the entry condition of the first monitoring event, or, the sixth number of times refers to the consecutive number of times the first model monitoring accuracy meets the entry condition of the first monitoring event; (2) the fifth condition includes: the seventh number of times the second model monitoring accuracy meets the entry condition of the second monitoring event within the second reporting timer duration is greater than the second reporting threshold; the seventh number of times is determined based on the real-time number of times the second model monitoring accuracy meets the entry condition of the second monitoring event, or, the seventh number of times is determined based on the real-time number of times the second model monitoring accuracy meets the entry condition of the second monitoring event and the real-time number of times the second model monitoring accuracy meets the exit condition of the second monitoring event, or, the seventh number of times refers to a consecutive number of times the second model monitoring accuracy meets the entry condition of the second monitoring event; (3) the sixth condition includes: an eighth number of times the second model monitoring accuracy meets the exit condition of the second monitoring event within the second reporting timer duration is greater than the second reporting threshold; the eighth number of times is determined based on the real-time number of times the second model monitoring accuracy meets the exit condition of the second monitoring event, or the eighth number of times is determined based on the real-time number of times the second model monitoring accuracy meets the exit condition of the second monitoring event and the real-time number of times the second model monitoring accuracy meets the entry condition of the second monitoring event, or the eighth number of times refers to a consecutive number of times the second model monitoring accuracy meets the exit condition of the second monitoring event.

Furthermore, the step of controlling the triggering operation for model monitoring reporting based on the model monitoring accuracy and monitoring event-related information further includes: triggering the model monitoring reporting operation when the monitoring event status is that the model monitoring accuracy of the currently used model is less than the model monitoring accuracy of any candidate model; wherein reported content is used for indicating that model switching is to be done and the reported content carries information about the candidate model.

In an embodiment of the present disclosure, the information processing apparatus further includes: a second obtaining unit, configured to obtain the at least two test samples by using a time-domain sliding window of a first length.

Furthermore, the information processing apparatus further includes: a first processing unit, configured to preprocess the at least two test samples before obtaining the model monitoring accuracy based on the at least two test samples; wherein the preprocessing includes at least one of weighted processing or anomaly removal processing.

The entry condition and/or exit condition is determined based on the hysteresis parameter and the corresponding threshold.

In an embodiment of this disclosure, the monitoring event-related information is determined according to a predefinition in a protocol and/or a network-side configuration; and/or, the monitoring reporting condition is determined according to a predefinition in a protocol and/or a network-side configuration; and/or, the first length is determined according to a predefinition in a protocol and/or a network-side configuration; and/or, the sliding step size of the time-domain sliding window is determined according to a predefinition in a protocol and/or a network-side configuration; and/or, the hysteresis parameter is determined according to a predefinition in a protocol and/or a network-side configuration; and/or, the threshold is determined according to a predefinition in a protocol and/or a network-side configuration.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

An embodiment of this disclosure further provides an information processing apparatus applied to a first device; as shown in Fig. 11, the information processing apparatus including:
a third obtaining unit 111, configured to obtain at least two test samples by using a time-domain sliding window of a first length;
wherein the test samples are determined based on a target CSI and a CSI recovered through a model and corresponding to the target CSI;
the first device is a network device or a terminal.

By obtaining at least two test samples by using a time-domain sliding window of a first length, wherein the test samples are determined based on a target CSI and a CSI recovered through a model and corresponding to the target CSI, the first device is a network device or a terminal, the information processing apparatus according to the embodiment of this disclosure may support accurate acquisition of test samples, thereby improving the obtained model monitoring accuracy, and further supporting accurate control of model monitoring reporting based on the model monitoring accuracy (i.e., monitoring results), thus enabling accurate decision-making operations such as model switching, rollback, update, activation, and/or deactivation. This effectively solves the problem in related technologies that information processing schemes for model monitoring cannot support accurate model decision-making operations.

Furthermore, the information processing apparatus further includes: a second processing unit, configured to preprocess the at least two test samples; wherein the preprocessing includes at least one of weighted processing or anomaly removal processing.

In an embodiment of this disclosure, the first length is determined according to a predefinition in a protocol and/or a network-side configuration; and/or, the sliding step size of the time-domain sliding window is determined according to a predefinition in a protocol and/or a network-side configuration.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

It should be noted that the division of units in the embodiments of this disclosure is illustrative and only represents a logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

An embodiment of this disclosure further provides a non-transitory readable storage medium storing a computer program for causing a processor to execute the above-described method.

The non-transitory readable storage medium can be any available medium or data storage device that the processor can access, including but not limited to magnetic memory (such as floppy disks, hard disks, magnetic tapes, magneto-optical disks (MO), etc.), optical memory (such as compact discs (CDs), digital video discs (DVDs), Blu-ray discs (BD), highdefinition versatile discs (HVD), etc.), and semiconductor memory (such as ROMs, erasable programmable read-only memory (EPROM), electrically erasable programmable read-only memory (EEPROM), non-volatile memory (NAND (Non-volatile Memory Device) FLASH), solid state drives (SSDs), etc.).

The embodiments of the above information processing method are all applicable to the embodiments of the non-transitory readable storage medium and can achieve the same technical effect.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program code.

This disclosure is described with reference to flowchart illustrations and/or block diagrams of methods, apparatus (systems), and computer program products according to embodiments of this disclosure. It will be understood that each block of the flowchart illustrations and/or block diagrams, and combinations of blocks in the flowchart illustrations and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, which execute via the processor of the computer or other programmable data processing apparatus, create means for implementing the functions specified in one or more flowchart illustrations and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing apparatus to cause a series of operational steps to be performed on the computer or other programmable apparatus to produce a computerimplemented process, such that the instructions, which execute on the computer or other programmable apparatus, provide steps for implementing the functions specified in one or more flowcharts and/or one or more block diagrams.

It should be noted that the above division of modules is merely a logical functional division. In actual implementation, they can be fully or partially integrated into a single physical entity, or they can be physically separated. Furthermore, these modules can be implemented entirely in software via processing element calls; they can be fully implemented in hardware; or some modules can be implemented by processing element calls to software, while others are implemented in hardware. For example, a determination module can be a separate processing element, or it can be integrated into a chip in the aforementioned device. Alternatively, it can be stored as program code in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be completed through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using processing element scheduler code, the processing element can be a general-purpose processor, such as a central processing unit (CPU) or other processor capable of calling program code. Furthermore, these modules can be integrated together to form a system-on-a-chip (SOC).

The terms "first", "second" and the like in this disclosure are used to distinguish similar objects and are not necessarily used to describe a specific order or sequence. It should be understood that such terms can be interchanged where appropriate so that embodiments of this disclosure described herein may be implemented in orders other than those illustrated or described herein. Furthermore, the terms "including" and "having" and any variations thereof, are intended to cover non-exclusive inclusion; for example, a process, method, system, product, or apparatus that includes a series of steps or units is not necessarily limited to those steps or units explicitly listed, but may include other steps or units not explicitly listed or inherent to such processes, methods, products, or apparatus. Additionally, the use of "and/or" in the specification and claims indicates at least one of the connected objects, such as A and/or B and/or C, indicating seven possibilities: A alone, B alone, C alone, and both A and B, both B and C, both A and C, and A, B, and C. Similarly, the use of "at least one of A or B" in this specification and claims should be understood as "A alone, B alone, or both A and B."

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. An information processing method, performed by a first device, comprising:
obtaining performance monitoring accuracy based on at least two test samples, wherein the test samples are determined based on a target channel state information (CSI) and a CSI recovered through a model and corresponding to the target CSI, the performance monitoring accuracy is based on a statistical result of the at least two test samples;
determining monitoring event-related information associated with the performance monitoring accuracy, wherein the monitoring event-related information comprises: a definition of a monitoring event, and an entry condition and/or exit condition of the monitoring event; and
controlling a triggering operation for performance monitoring reporting based on the performance monitoring accuracy and the monitoring event-related information;
wherein the first device is a network device or a terminal.

2. The information processing method according to claim 1, wherein the controlling the triggering operation for performance monitoring reporting based on the performance monitoring accuracy and the monitoring event-related information comprises:
in a case that a monitoring event status is that the performance monitoring accuracy does not meet a usage condition, and the performance monitoring accuracy meets the entry condition of the monitoring event, triggering an operation of performance monitoring reporting; or,
in a case that the monitoring event status is that the performance monitoring accuracy meets the usage condition and the performance monitoring accuracy meets the exit condition of the monitoring event, triggering an operation of performance monitoring reporting.

3. The information processing method according to claim 2, further comprising:
determining a monitoring reporting condition; wherein the monitoring reporting condition comprises: a reporting threshold and/or a reporting timer duration;
the triggering the operation of performance monitoring reporting in a case that the monitoring event status is that the performance monitoring accuracy does not meet the usage condition, and the performance monitoring accuracy meets the entry condition of the monitoring event comprises:
in a case that the monitoring event status is that the performance monitoring accuracy does not meet the usage condition, and a first number of times the performance monitoring accuracy meets the entry condition of the monitoring event within the reporting timer duration is greater than the reporting threshold, triggering the operation of performance monitoring reporting; wherein reported content is used for indicating that a currently used model is expired; the first number of times is determined based on a real-time number of times the performance monitoring accuracy meets the entry condition of the monitoring event, or, the first number of times is determined based on the real-time number of times the performance monitoring accuracy meets the entry condition of the monitoring event and a real-time number of times the performance monitoring accuracy meets the exit condition of the monitoring event, or, the first number of times refers to a consecutive number of times the performance monitoring accuracy meets the entry condition of the monitoring event; and/or
the triggering the operation of performance monitoring reporting in a case that the monitoring event status is that the performance monitoring accuracy meets the usage condition, and the performance monitoring accuracy meets the exit condition of the monitoring event comprises:
in a case that the monitoring event status is that the performance monitoring accuracy meets the usage condition, and a second number of times the performance monitoring accuracy meets the exit condition of the monitoring event within the reporting timer duration is greater than the reporting threshold, triggering the operation of performance monitoring reporting; wherein reported content is used for indicating that a currently used model is expired; the second number of times is determined based on a real-time number of times the performance monitoring accuracy meets the exit condition of the monitoring event, or, the second number of times is determined based on the real-time number of times the performance monitoring accuracy meets the exit condition of the monitoring event and a real-time number of times the performance monitoring accuracy meets the entry condition of the monitoring event, or, the second number of times refers to a consecutive number of times the performance monitoring accuracy meets the exit condition of the monitoring event.

4. The information processing method according to claim 3, wherein the model comprises the currently used model and at least one candidate model;
the obtaining the performance monitoring accuracy based on the at least two test samples comprises:
obtaining a first performance monitoring accuracy for the currently used model based on at least two test samples corresponding to the currently used model;
obtaining a second performance monitoring accuracy for the candidate model based on at least two test samples corresponding to the candidate model.

5. The information processing method according to claim 4, wherein the monitoring event comprises: a first monitoring event for the currently used model and a second monitoring event for the candidate model;
the reporting threshold comprises: a first reporting threshold for the currently used model and a second reporting threshold for the candidate model;
the reporting timer duration comprises: a first reporting timer duration for the currently used model and a second reporting timer duration for the candidate model.

6. The information processing method according to claim 5, wherein the triggering the operation of performance monitoring reporting in a case that the monitoring event status is that the performance monitoring accuracy does not meet the usage condition, and the performance monitoring accuracy meets the entry condition of the monitoring event comprises:
in a case that a first monitoring event status is that the first performance monitoring accuracy does not meet the usage condition, and a first condition is met, and a second monitoring event status is that the second performance monitoring accuracy of any candidate model meets the usage condition, and a second condition is met, triggering the operation of performance monitoring reporting; reported content is used for indicating that model switching is to be done and the reported content carries information about the candidate model; or,
in a case that the first monitoring event status is that the first performance monitoring accuracy does not meet the usage condition, and the first condition is met, and the second monitoring event status is that the second performance monitoring accuracy of any candidate model does not meet the usage condition, and a third condition is met, triggering the operation of performance monitoring reporting; reported content is used for indicating that model switching is to be done and the reported content carries information about the candidate model;
wherein the first condition comprises: a third number of times the first performance monitoring accuracy meets an entry condition of the first monitoring event within the first reporting timer duration is greater than the first reporting threshold; the third number of times is determined based on a real-time number of times the first performance monitoring accuracy meets the entry condition of the first monitoring event, or the third number of times is determined based on the real-time number of times the first performance monitoring accuracy meets the entry condition of the first monitoring event and a real-time number of times the first performance monitoring accuracy meets an exit condition of the first monitoring event, or the third number of times refers to a consecutive number of times the first performance monitoring accuracy meets the entry condition of the first monitoring event;
the second condition comprises: a fourth number of times the second performance monitoring accuracy meets an entry condition of the second monitoring event within the second reporting timer duration is greater than the second reporting threshold; the fourth number of times is determined based on a real-time number of times the second performance monitoring accuracy meets the entry condition of the second monitoring event, or the fourth number of times is determined based on the real-time number of times the second performance monitoring accuracy meets the entry condition of the second monitoring event and a real-time number of times the second performance monitoring accuracy meets an exit condition of the second monitoring event, or the fourth number of times refers to a consecutive number of times the second performance monitoring accuracy meets the entry condition of the second monitoring event;
the third condition comprises: a fifth number of times the second performance monitoring accuracy meets the exit condition of the second monitoring event within the second reporting timer duration is greater than the second reporting threshold; the fifth number of times is determined based on the real-time number of times the second performance monitoring accuracy meets the exit condition of the second monitoring event, or the fifth number of times is determined based on the real-time number of times the second performance monitoring accuracy meets the exit condition of the second monitoring event and the real-time number of times the second performance monitoring accuracy meets the entry condition of the second monitoring event, or the fifth number of times refers to a consecutive number of times the second performance monitoring accuracy meets the exit condition of the second monitoring event.

7. The information processing method according to claim 5, wherein the triggering the operation of performance monitoring reporting in a case that the monitoring event status is that the performance monitoring accuracy meets the usage condition, and the performance monitoring accuracy meets the exit condition of the monitoring event comprises:
in a case that a first monitoring event status is that the first performance monitoring accuracy meets the usage condition, and a fourth condition is met, and a second monitoring event status is that the second performance monitoring accuracy of any candidate model meets the usage condition, and a fifth condition is met, triggering the operation of performance monitoring reporting; reported content is used for indicating that model switching is to be done and the reported content carries information about the candidate model; or,
in a case that the first monitoring event status is that the first performance monitoring accuracy meets the usage condition, and the fourth condition is met, and the second monitoring event status is that the second performance monitoring accuracy of any candidate model does not meet the usage condition, and a sixth condition is met, triggering the operation of performance monitoring reporting; reported content is used for indicating that model switching is to be done and the reported content carries information about the candidate model;
wherein the fourth condition comprises: a sixth number of times the first performance monitoring accuracy meets an exit condition of the first monitoring event within the first reporting timer duration is greater than the first reporting threshold; the sixth number of times is determined based on a real-time number of times the first performance monitoring accuracy meets the exit condition of the first monitoring event, or the sixth number of times is determined based on the real-time number of times the first performance monitoring accuracy meets the exit condition of the first monitoring event and a real-time number of times the first performance monitoring accuracy meets an entry condition of the first monitoring event, or the sixth number of times refers to a consecutive number of times the first performance monitoring accuracy meets the entry condition of the first monitoring event;
the fifth condition comprises: a seventh number of times the second performance monitoring accuracy meets an entry condition of the second monitoring event within the second reporting timer duration is greater than the second reporting threshold; the seventh number of times is determined based on a real-time number of times the second performance monitoring accuracy meets the entry condition of the second monitoring event, or the seventh number of times is determined based on the real-time number of times the second performance monitoring accuracy meets the entry condition of the second monitoring event and a real-time number of times the second performance monitoring accuracy meets an exit condition of the second monitoring event, or the seventh number of times refers to a consecutive number of times the second performance monitoring accuracy meets the entry condition of the second monitoring event;
the sixth condition comprises: an eighth number of times the second performance monitoring accuracy meets the exit condition of the second monitoring event within the second reporting timer duration is greater than the second reporting threshold; the eighth number of times is determined based on the real-time number of times the second performance monitoring accuracy meets the exit condition of the second monitoring event, or the eighth number of times is determined based on the real-time number of times the second performance monitoring accuracy meets the exit condition of the second monitoring event and the real-time number of times the second performance monitoring accuracy meets the entry condition of the second monitoring event, or the eighth number of times refers to a consecutive number of times the second performance monitoring accuracy meets the exit condition of the second monitoring event.

8. The information processing method according to claim 2, wherein the controlling the triggering operation for performance monitoring reporting based on the performance monitoring accuracy and the monitoring event-related information further comprises:
in a case that the monitoring event status is that the performance monitoring accuracy of the currently used model is less than the performance monitoring accuracy of any candidate model, triggering an operation of performance monitoring reporting;
wherein reported content is used for indicating that model switching is to be done and the reported content carries information about the candidate model.

9. The information processing method according to claim 1, further comprising:
obtaining the at least two test samples by using a time-domain sliding window of a first length.

10. The information processing method according to claim 1, wherein, before obtaining the performance monitoring accuracy based on at least two test samples, the method further comprises:
preprocessing the at least two test samples;
wherein the preprocessing comprises at least one of weighted processing or anomaly removal processing.

11. The information processing method according to claim 1, wherein the entry condition and/or exit condition is determined based on a hysteresis parameter and a corresponding threshold.

12. The information processing method according to any one of claims 1 to 11, wherein the monitoring event-related information is determined according to a predefinition in a protocol and/or a network-side configuration; and/or
a monitoring reporting condition is determined according to a predefinition in a protocol and/or a network-side configuration; and/or
a first length is determined according to a predefinition in a protocol and/or a network-side configuration; and/or
a sliding step size of a time-domain sliding window is determined according to a predefinition in a protocol and/or a network-side configuration; and/or
a hysteresis parameter is determined according to a predefinition in a protocol and/or a network-side configuration; and/or
a threshold is determined according to a predefinition in a protocol and/or a network-side configuration.

13. An information processing method, performed by a first device, comprising:
obtaining at least two test samples by using a time-domain sliding window of a first length;
wherein the test samples are determined based on a target CSI and a CSI recovered through a model and corresponding to the target CSI;
the first device is a network device or a terminal.

14. The information processing method according to claim 13, further comprising:
preprocessing the at least two test samples;
wherein the preprocessing comprises at least one of weighted processing or anomaly removal processing.

15. The information processing method according to claim 13 or 14, wherein the first length is determined according to a predefinition in a protocol and/or a network-side configuration; and/or
a sliding step size of the time-domain sliding window is determined according to a predefinition in a protocol and/or a network-side configuration.

16. An information processing device, wherein the information processing device is a first device, the information processing device comprises a memory, a transceiver, and a processor,
the memory is used for storing a computer program; the transceiver is used for sending and receiving data under the control of the processor; and the processor is used for reading the computer programs from the memory and performing the following steps:
obtaining performance monitoring accuracy based on at least two test samples, wherein the test samples are determined based on a target channel state information (CSI) and a CSI recovered through a model and corresponding to the target CSI, the performance monitoring accuracy is based on a statistical result of the at least two test samples;
determining monitoring event-related information associated with the performance monitoring accuracy, wherein the monitoring event-related information comprises: a definition of a monitoring event, and an entry condition and/or exit condition of the monitoring event; and
controlling a triggering operation for performance monitoring reporting based on the performance monitoring accuracy and the monitoring event-related information;
wherein the first device is a network device or a terminal.

17. The information processing device according to claim 16, wherein the controlling the triggering operation for performance monitoring reporting based on the performance monitoring accuracy and the monitoring event-related information comprises:
in a case that a monitoring event status is that the performance monitoring accuracy does not meet a usage condition, and the performance monitoring accuracy meets the entry condition of the monitoring event, triggering an operation of performance monitoring reporting; or,
in a case that the monitoring event status is that the performance monitoring accuracy meets the usage condition and the performance monitoring accuracy meets the exit condition of the monitoring event, triggering an operation of performance monitoring reporting.

18. The information processing device according to claim 17, wherein the steps further comprise:
determining a monitoring reporting condition; wherein the monitoring reporting condition comprises: a reporting threshold and/or a reporting timer duration;
the triggering the operation of performance monitoring reporting in a case that the monitoring event status is that the performance monitoring accuracy does not meet the usage condition, and the performance monitoring accuracy meets the entry condition of the monitoring event comprises:
in a case that the monitoring event status is that the performance monitoring accuracy does not meet the usage condition, and a first number of times the performance monitoring accuracy meets the entry condition of the monitoring event within the reporting timer duration is greater than the reporting threshold, triggering the operation of performance monitoring reporting; wherein reported content is used for indicating that a currently used model is expired; the first number of times is determined based on a real-time number of times the performance monitoring accuracy meets the entry condition of the monitoring event, or, the first number of times is determined based on the real-time number of times the performance monitoring accuracy meets the entry condition of the monitoring event and a real-time number of times the performance monitoring accuracy meets the exit condition of the monitoring event, or, the first number of times refers to a consecutive number of times the performance monitoring accuracy meets the entry condition of the monitoring event; and/or
the triggering the operation of performance monitoring reporting in a case that the monitoring event status is that the performance monitoring accuracy meets the usage condition, and the performance monitoring accuracy meets the exit condition of the monitoring event comprises:
in a case that the monitoring event status is that the performance monitoring accuracy meets the usage condition, and a second number of times the performance monitoring accuracy meets the exit condition of the monitoring event within the reporting timer duration is greater than the reporting threshold, triggering the operation of performance monitoring reporting; wherein reported content is used for indicating that a currently used model is expired; the second number of times is determined based on a real-time number of times the performance monitoring accuracy meets the exit condition of the monitoring event, or, the second number of times is determined based on the real-time number of times the performance monitoring accuracy meets the exit condition of the monitoring event and a real-time number of times the performance monitoring accuracy meets the entry condition of the monitoring event, or, the second number of times refers to a consecutive number of times the performance monitoring accuracy meets the exit condition of the monitoring event.

19. The information processing device according to claim 18, wherein the model comprises the currently used model and at least one candidate model;
the obtaining the performance monitoring accuracy based on the at least two test samples comprises:
obtaining a first performance monitoring accuracy for the currently used model based on at least two test samples corresponding to the currently used model;
obtaining a second performance monitoring accuracy for the candidate model based on at least two test samples corresponding to the candidate model.

20. The information processing device according to claim 19, wherein the monitoring event comprises: a first monitoring event for the currently used model and a second monitoring event for the candidate model;
the reporting threshold comprises: a first reporting threshold for the currently used model and a second reporting threshold for the candidate model;
the reporting timer duration comprises: a first reporting timer duration for the currently used model and a second reporting timer duration for the candidate model.

21. The information processing device according to claim 20, wherein the triggering the operation of performance monitoring reporting in a case that the monitoring event status is that the performance monitoring accuracy does not meet the usage condition, and the performance monitoring accuracy meets the entry condition of the monitoring event comprises:
in a case that a first monitoring event status is that the first performance monitoring accuracy does not meet the usage condition, and a first condition is met, and a second monitoring event status is that the second performance monitoring accuracy of any candidate model meets the usage condition, and a second condition is met, triggering the operation of performance monitoring reporting; reported content is used for indicating that model switching is to be done and the reported content carries information about the candidate model; or,
in a case that the first monitoring event status is that the first performance monitoring accuracy does not meet the usage condition, and the first condition is met, and the second monitoring event status is that the second performance monitoring accuracy of any candidate model does not meet the usage condition, and a third condition is met, triggering the operation of performance monitoring reporting; reported content is used for indicating that model switching is to be done and the reported content carries information about the candidate model;
wherein the first condition comprises: a third number of times the first performance monitoring accuracy meets an entry condition of the first monitoring event within the first reporting timer duration is greater than the first reporting threshold; the third number of times is determined based on a real-time number of times the first performance monitoring accuracy meets the entry condition of the first monitoring event, or the third number of times is determined based on the real-time number of times the first performance monitoring accuracy meets the entry condition of the first monitoring event and a real-time number of times the first performance monitoring accuracy meets an exit condition of the first monitoring event, or the third number of times refers to a consecutive number of times the first performance monitoring accuracy meets the entry condition of the first monitoring event;
the second condition comprises: a fourth number of times the second performance monitoring accuracy meets an entry condition of the second monitoring event within the second reporting timer duration is greater than the second reporting threshold; the fourth number of times is determined based on a real-time number of times the second performance monitoring accuracy meets the entry condition of the second monitoring event, or the fourth number of times is determined based on the real-time number of times the second performance monitoring accuracy meets the entry condition of the second monitoring event and a real-time number of times the second performance monitoring accuracy meets an exit condition of the second monitoring event, or the fourth number of times refers to a consecutive number of times the second performance monitoring accuracy meets the entry condition of the second monitoring event;
the third condition comprises: a fifth number of times the second performance monitoring accuracy meets the exit condition of the second monitoring event within the second reporting timer duration is greater than the second reporting threshold; the fifth number of times is determined based on the real-time number of times the second performance monitoring accuracy meets the exit condition of the second monitoring event, or the fifth number of times is determined based on the real-time number of times the second performance monitoring accuracy meets the exit condition of the second monitoring event and the real-time number of times the second performance monitoring accuracy meets the entry condition of the second monitoring event, or the fifth number of times refers to a consecutive number of times the second performance monitoring accuracy meets the exit condition of the second monitoring event.

22. The information processing device according to claim 20, wherein the triggering the operation of performance monitoring reporting in a case that the monitoring event status is that the performance monitoring accuracy meets the usage condition, and the performance monitoring accuracy meets the exit condition of the monitoring event comprises:
in a case that a first monitoring event status is that the first performance monitoring accuracy meets the usage condition, and a fourth condition is met, and a second monitoring event status is that the second performance monitoring accuracy of any candidate model meets the usage condition, and a fifth condition is met, triggering the operation of performance monitoring reporting; reported content is used for indicating that model switching is to be done and the reported content carries information about the candidate model; or,
in a case that the first monitoring event status is that the first performance monitoring accuracy meets the usage condition, and the fourth condition is met, and the second monitoring event status is that the second performance monitoring accuracy of any candidate model does not meet the usage condition, and a sixth condition is met, triggering the operation of performance monitoring reporting; reported content is used for indicating that model switching is to be done and the reported content carries information about the candidate model;
wherein the fourth condition comprises: a sixth number of times the first performance monitoring accuracy meets an exit condition of the first monitoring event within the first reporting timer duration is greater than the first reporting threshold; the sixth number of times is determined based on a real-time number of times the first performance monitoring accuracy meets the exit condition of the first monitoring event, or the sixth number of times is determined based on the real-time number of times the first performance monitoring accuracy meets the exit condition of the first monitoring event and a real-time number of times the first performance monitoring accuracy meets an entry condition of the first monitoring event, or the sixth number of times refers to a consecutive number of times the first performance monitoring accuracy meets the entry condition of the first monitoring event;
the fifth condition comprises: a seventh number of times the second performance monitoring accuracy meets an entry condition of the second monitoring event within the second reporting timer duration is greater than the second reporting threshold; the seventh number of times is determined based on a real-time number of times the second performance monitoring accuracy meets the entry condition of the second monitoring event, or the seventh number of times is determined based on the real-time number of times the second performance monitoring accuracy meets the entry condition of the second monitoring event and a real-time number of times the second performance monitoring accuracy meets an exit condition of the second monitoring event, or the seventh number of times refers to a consecutive number of times the second performance monitoring accuracy meets the entry condition of the second monitoring event;
the sixth condition comprises: an eighth number of times the second performance monitoring accuracy meets the exit condition of the second monitoring event within the second reporting timer duration is greater than the second reporting threshold; the eighth number of times is determined based on the real-time number of times the second performance monitoring accuracy meets the exit condition of the second monitoring event, or the eighth number of times is determined based on the real-time number of times the second performance monitoring accuracy meets the exit condition of the second monitoring event and the real-time number of times the second performance monitoring accuracy meets the entry condition of the second monitoring event, or the eighth number of times refers to a consecutive number of times the second performance monitoring accuracy meets the exit condition of the second monitoring event.

23. The information processing device according to claim 17, wherein the controlling the triggering operation for performance monitoring reporting based on the performance monitoring accuracy and the monitoring event-related information further comprises:
in a case that the monitoring event status is that the performance monitoring accuracy of the currently used model is less than the performance monitoring accuracy of any candidate model, triggering an operation of performance monitoring reporting;
wherein reported content is used for indicating that model switching is to be done and the reported content carries information about the candidate model.

24. The information processing device according to claim 16, wherein the steps further comprise:
obtaining the at least two test samples by using a time-domain sliding window of a first length.

25. The information processing device according to claim 16, wherein the steps further comprise:
before obtaining the performance monitoring accuracy based on at least two test samples, preprocessing the at least two test samples;
wherein the preprocessing comprises at least one of weighted processing or anomaly removal processing.

26. The information processing device according to claim 16, wherein the entry condition and/or exit condition is determined based on a hysteresis parameter and a corresponding threshold.

27. The information processing device according to any one of claims 16 to 26, wherein the monitoring event-related information is determined according to a predefinition in a protocol and/or a network-side configuration; and/or
a monitoring reporting condition is determined according to a predefinition in a protocol and/or a network-side configuration; and/or
a first length is determined according to a predefinition in a protocol and/or a network-side configuration; and/or
a sliding step size of a time-domain sliding window is determined according to a predefinition in a protocol and/or a network-side configuration; and/or
a hysteresis parameter is determined according to a predefinition in a protocol and/or a network-side configuration; and/or
a threshold is determined according to a predefinition in a protocol and/or a network-side configuration.

28. An information processing device, wherein the information processing device is a first device, the information processing device comprises a memory, a transceiver, and a processor,
the memory is used for storing a computer program; the transceiver is used for sending and receiving data under the control of the processor; and the processor is used for reading the computer programs from the memory and performing the following step:
obtaining at least two test samples by using a time-domain sliding window of a first length;
wherein the test samples are determined based on a target CSI and a CSI recovered through a model and corresponding to the target CSI;
the first device is a network device or a terminal.

29. The information processing device according to claim 28, wherein the step further comprises:
preprocessing the at least two test samples;
wherein the preprocessing comprises at least one of weighted processing or anomaly removal processing.

30. The information processing device according to claim 28 or 29, wherein the first length is determined according to a predefinition in a protocol and/or a network-side configuration; and/or
a sliding step size of the time-domain sliding window is determined according to a predefinition in a protocol and/or a network-side configuration.

31. An information processing apparatus applied to a first device, the information processing apparatus comprising:
a first obtaining unit, configured to obtain performance monitoring accuracy based on at least two test samples, wherein the test samples are determined based on a target channel state information (CSI) and a CSI recovered through a model and corresponding to the target CSI; the performance monitoring accuracy is based on a statistical result of the at least two test samples;
a first determining unit, configured to determine monitoring event-related information associated with the performance monitoring accuracy, wherein the monitoring event-related information comprises: a definition of a monitoring event, and an entry condition and/or exit condition of the monitoring event; and
a first control unit, configured to control a triggering operation for performance monitoring reporting based on the performance monitoring accuracy and the monitoring event-related information;
wherein the first device is a network device or a terminal.

32. The information processing apparatus according to claim 31, wherein the controlling the triggering operation for performance monitoring reporting based on the performance monitoring accuracy and the monitoring event-related information comprises:
in a case that a monitoring event status is that the performance monitoring accuracy does not meet a usage condition, and the performance monitoring accuracy meets the entry condition of the monitoring event, triggering an operation of performance monitoring reporting; or,
in a case that the monitoring event status is that the performance monitoring accuracy meets the usage condition and the performance monitoring accuracy meets the exit condition of the monitoring event, triggering an operation of performance monitoring reporting.

33. The information processing apparatus according to claim 32, further comprising:
a second determining unit, configured to determine a monitoring reporting condition, wherein the monitoring reporting condition comprises: a reporting threshold and/or a reporting timer duration;
the triggering the operation of performance monitoring reporting in a case that the monitoring event status is that the performance monitoring accuracy does not meet the usage condition, and the performance monitoring accuracy meets the entry condition of the monitoring event comprises:
in a case that the monitoring event status is that the performance monitoring accuracy does not meet the usage condition, and a first number of times the performance monitoring accuracy meets the entry condition of the monitoring event within the reporting timer duration is greater than the reporting threshold, triggering the operation of performance monitoring reporting; wherein reported content is used for indicating that a currently used model is expired; the first number of times is determined based on a real-time number of times the performance monitoring accuracy meets the entry condition of the monitoring event, or, the first number of times is determined based on the real-time number of times the performance monitoring accuracy meets the entry condition of the monitoring event and a real-time number of times the performance monitoring accuracy meets the exit condition of the monitoring event, or, the first number of times refers to a consecutive number of times the performance monitoring accuracy meets the entry condition of the monitoring event; and/or
the triggering the operation of performance monitoring reporting in a case that the monitoring event status is that the performance monitoring accuracy meets the usage condition, and the performance monitoring accuracy meets the exit condition of the monitoring event comprises:
in a case that the monitoring event status is that the performance monitoring accuracy meets the usage condition, and a second number of times the performance monitoring accuracy meets the exit condition of the monitoring event within the reporting timer duration is greater than the reporting threshold, triggering the operation of performance monitoring reporting; wherein reported content is used for indicating that a currently used model is expired; the second number of times is determined based on a real-time number of times the performance monitoring accuracy meets the exit condition of the monitoring event, or, the second number of times is determined based on the real-time number of times the performance monitoring accuracy meets the exit condition of the monitoring event and a real-time number of times the performance monitoring accuracy meets the entry condition of the monitoring event, or, the second number of times refers to a consecutive number of times the performance monitoring accuracy meets the exit condition of the monitoring event.

34. The information processing apparatus according to claim 33, wherein the model comprises the currently used model and at least one candidate model;
the obtaining the performance monitoring accuracy based on the at least two test samples comprises:
obtaining a first performance monitoring accuracy for the currently used model based on at least two test samples corresponding to the currently used model;
obtaining a second performance monitoring accuracy for the candidate model based on at least two test samples corresponding to the candidate model.

35. The information processing apparatus according to claim 34, wherein the monitoring event comprises: a first monitoring event for the currently used model and a second monitoring event for the candidate model;
the reporting threshold comprises: a first reporting threshold for the currently used model and a second reporting threshold for the candidate model;
the reporting timer duration comprises: a first reporting timer duration for the currently used model and a second reporting timer duration for the candidate model.

36. The information processing apparatus according to claim 35, wherein the triggering the operation of performance monitoring reporting in a case that the monitoring event status is that the performance monitoring accuracy does not meet the usage condition, and the performance monitoring accuracy meets the entry condition of the monitoring event comprises:
in a case that a first monitoring event status is that the first performance monitoring accuracy does not meet the usage condition, and a first condition is met, and a second monitoring event status is that the second performance monitoring accuracy of any candidate model meets the usage condition, and a second condition is met, triggering the operation of performance monitoring reporting; reported content is used for indicating that model switching is to be done and the reported content carries information about the candidate model; or,
in a case that the first monitoring event status is that the first performance monitoring accuracy does not meet the usage condition, and the first condition is met, and the second monitoring event status is that the second performance monitoring accuracy of any candidate model does not meet the usage condition, and a third condition is met, triggering the operation of performance monitoring reporting; reported content is used for indicating that model switching is to be done and the reported content carries information about the candidate model;
wherein the first condition comprises: a third number of times the first performance monitoring accuracy meets an entry condition of the first monitoring event within the first reporting timer duration is greater than the first reporting threshold; the third number of times is determined based on a real-time number of times the first performance monitoring accuracy meets the entry condition of the first monitoring event, or the third number of times is determined based on the real-time number of times the first performance monitoring accuracy meets the entry condition of the first monitoring event and a real-time number of times the first performance monitoring accuracy meets an exit condition of the first monitoring event, or the third number of times refers to a consecutive number of times the first performance monitoring accuracy meets the entry condition of the first monitoring event;
the second condition comprises: a fourth number of times the second performance monitoring accuracy meets an entry condition of the second monitoring event within the second reporting timer duration is greater than the second reporting threshold; the fourth number of times is determined based on a real-time number of times the second performance monitoring accuracy meets the entry condition of the second monitoring event, or the fourth number of times is determined based on the real-time number of times the second performance monitoring accuracy meets the entry condition of the second monitoring event and a real-time number of times the second performance monitoring accuracy meets an exit condition of the second monitoring event, or the fourth number of times refers to a consecutive number of times the second performance monitoring accuracy meets the entry condition of the second monitoring event;
the third condition comprises: a fifth number of times the second performance monitoring accuracy meets the exit condition of the second monitoring event within the second reporting timer duration is greater than the second reporting threshold; the fifth number of times is determined based on the real-time number of times the second performance monitoring accuracy meets the exit condition of the second monitoring event, or the fifth number of times is determined based on the real-time number of times the second performance monitoring accuracy meets the exit condition of the second monitoring event and the real-time number of times the second performance monitoring accuracy meets the entry condition of the second monitoring event, or the fifth number of times refers to a consecutive number of times the second performance monitoring accuracy meets the exit condition of the second monitoring event.

37. The information processing apparatus according to claim 35, wherein the triggering the operation of performance monitoring reporting in a case that the monitoring event status is that the performance monitoring accuracy meets the usage condition, and the performance monitoring accuracy meets the exit condition of the monitoring event comprises:
in a case that a first monitoring event status is that the first performance monitoring accuracy meets the usage condition, and a fourth condition is met, and a second monitoring event status is that the second performance monitoring accuracy of any candidate model meets the usage condition, and a fifth condition is met, triggering the operation of performance monitoring reporting; reported content is used for indicating that model switching is to be done and the reported content carries information about the candidate model; or,
in a case that the first monitoring event status is that the first performance monitoring accuracy meets the usage condition, and the fourth condition is met, and the second monitoring event status is that the second performance monitoring accuracy of any candidate model does not meet the usage condition, and a sixth condition is met, triggering the operation of performance monitoring reporting; reported content is used for indicating that model switching is to be done and the reported content carries information about the candidate model;
wherein the fourth condition comprises: a sixth number of times the first performance monitoring accuracy meets an exit condition of the first monitoring event within the first reporting timer duration is greater than the first reporting threshold; the sixth number of times is determined based on a real-time number of times the first performance monitoring accuracy meets the exit condition of the first monitoring event, or the sixth number of times is determined based on the real-time number of times the first performance monitoring accuracy meets the exit condition of the first monitoring event and a real-time number of times the first performance monitoring accuracy meets an entry condition of the first monitoring event, or the sixth number of times refers to a consecutive number of times the first performance monitoring accuracy meets the entry condition of the first monitoring event;
the fifth condition comprises: a seventh number of times the second performance monitoring accuracy meets an entry condition of the second monitoring event within the second reporting timer duration is greater than the second reporting threshold; the seventh number of times is determined based on a real-time number of times the second performance monitoring accuracy meets the entry condition of the second monitoring event, or the seventh number of times is determined based on the real-time number of times the second performance monitoring accuracy meets the entry condition of the second monitoring event and a real-time number of times the second performance monitoring accuracy meets an exit condition of the second monitoring event, or the seventh number of times refers to a consecutive number of times the second performance monitoring accuracy meets the entry condition of the second monitoring event;
the sixth condition comprises: an eighth number of times the second performance monitoring accuracy meets the exit condition of the second monitoring event within the second reporting timer duration is greater than the second reporting threshold; the eighth number of times is determined based on the real-time number of times the second performance monitoring accuracy meets the exit condition of the second monitoring event, or the eighth number of times is determined based on the real-time number of times the second performance monitoring accuracy meets the exit condition of the second monitoring event and the real-time number of times the second performance monitoring accuracy meets the entry condition of the second monitoring event, or the eighth number of times refers to a consecutive number of times the second performance monitoring accuracy meets the exit condition of the second monitoring event.

38. The information processing apparatus according to claim 32, wherein the controlling the triggering operation for performance monitoring reporting based on the performance monitoring accuracy and the monitoring event-related information further comprises:
in a case that the monitoring event status is that the performance monitoring accuracy of the currently used model is less than the performance monitoring accuracy of any candidate model, triggering an operation of performance monitoring reporting;
wherein reported content is used for indicating that model switching is to be done and the reported content carries information about the candidate model.

39. The information processing apparatus according to claim 31, further comprising:
a second obtaining unit, configured to obtain the at least two test samples by using a time-domain sliding window of a first length.

40. The information processing apparatus according to claim 31, further comprising:
a first processing unit, configured to preprocess the at least two test samples before obtaining the performance monitoring accuracy based on the at least two test samples;
wherein the preprocessing comprises at least one of weighted processing or anomaly removal processing.

41. The information processing apparatus according to claim 31, wherein the entry condition and/or exit condition is determined based on a hysteresis parameter and a corresponding threshold.

42. The information processing apparatus according to any one of claims 31 to 41, wherein the monitoring event-related information is determined according to a predefinition in a protocol and/or a network-side configuration; and/or
a monitoring reporting condition is determined according to a predefinition in a protocol and/or a network-side configuration; and/or
a first length is determined according to a predefinition in a protocol and/or a network-side configuration; and/or
a sliding step size of a time-domain sliding window is determined according to a predefinition in a protocol and/or a network-side configuration; and/or
a hysteresis parameter is determined according to a predefinition in a protocol and/or a network-side configuration; and/or
a threshold is determined according to a predefinition in a protocol and/or a network-side configuration.

43. An information processing apparatus applied to a first device, the information processing apparatus comprising:
a third obtaining unit, configured to obtain at least two test samples by using a time-domain sliding window of a first length;
wherein the test samples are determined based on a target CSI and a CSI recovered through a model and corresponding to the target CSI;
the first device is a network device or a terminal.

44. The information processing apparatus according to claim 43, further comprising:
a second processing unit, configured to preprocess the at least two test samples;
wherein the preprocessing comprises at least one of weighted processing or anomaly removal processing.

45. The information processing apparatus according to claim 43 or 44, wherein the first length is determined according to a predefinition in a protocol and/or a network-side configuration; and/or
a sliding step size of the time-domain sliding window is determined according to a predefinition in a protocol and/or a network-side configuration.

46. A non-transitory readable storage medium storing a computer program, wherein the computer program is configured to cause a processor to perform the method according to any one of claims 1 to 15.
